# EUROPÄISCHE PATENTSCHRIFT

(11) **EP 3 144 098 B1**
(45) Veröffentlichungstag und Bekanntmachung des Hinweises auf die Patenterteilung: **25.08.2021**
(21) Anmeldenummer: 16187808.7
(22) Anmeldetag: 08.09.2016
(51) Int. Cl.: B23Q 1/00, B23Q 5/04, B23K 26/00, B23Q 3/155, B23K 26/14, B23K 26/34, H02J 50/10

(54) **KOPPLUNGSSYSTEM ZUR VERWENDUNG AN EINER SPINDELVORRICHTUNG EINER WERKZEUGMASCHINE**
COUPLING SYSTEM FOR USE ON A SPINDLE DEVICE OF A MACHINE TOOL
SYSTÈME DE COUPLAGE POUR UTILISER SUR UNE BROCHE D'UNE MACHINE-OUTIL

(30) Priorität: 18.09.2015 DE 102015218030
(43) Veröffentlichungstag der Anmeldung: 22.03.2017
(73) Patentinhaber: DMG MORI Ultrasonic Lasertec GmbH, 55758 Stipshausen (DE)
(72) Erfinder: SCHWENK, Gaston, 55469 Simmern (DE); KETELAER, Jens, 65205 Wiesbaden (DE)
(74) Vertreter: MERH-IP Matias Erny Reichl Hoffmann Patentanwälte PartG mbB

(56) Entgegenhaltungen:
- EP-A1- 2 837 463
- WO-A1-2010/091821
- WO-A1-2014/086926
- DE-A1-102005 011 197
- TW-U- M 499 978

## Beschreibung

Die vorliegende Erfindung betrifft ein System bzw. Kopplungssystem zur Verwendung an einer Spindelvorrichtung einer Werkzeugmaschine.

### Hintergrund

Im Stand der Technik sind Werkzeugmaschinen bekannt, die sowohl für eine materialabtragende Bearbeitung als auch für eine materialauftragende Bearbeitung eines Werkstücks einsetzbar sind.

Die WO 2010/091821 A1 offenbart eine Kopplungsschnittstelleneinheit nach dem Oberbegriff des Anspruchs 11 zum Verbinden eines Werkzeugs mit einer Werkzeugmaschine. Die Schnittstelle weist eine Spule zum berührungslosen Übertragen elektrischer Energie auf.

DE 10 2013 224 649 A1 beschreibt eine Werkzeugmaschine mit einer Maschinensteuerung, einem Maschinenrahmen, einem Werkstücktisch, einer vorzugsweise nach einer Norm ausgebildeten Werkzeugaufnahme, mehreren translatorischen und/oder rotatorischen Achsen zur Einstellung einer relativen Lage zwischen Werkstücktisch und Werkzeugaufnahme, einem Werkzeugmagazin für ein oder mehrere materialabtragende, insbesondere spanende Werkzeuge, einem Werkzeugwechselmechanismus zum automatischen Verbringen von Werkzeugen zwischen Werkzeugaufnahme und Werkzeugmagazin, einem in die Werkzeugaufnahme einsetzbaren Auftragsschweißkopf und einer Lagereinrichtung zum Lagern des Auftragsschweißkopfs jenseits der Werkzeugaufnahme.

WO 2014/013247 A2 beschreibt eine Werkzeugmaschine, die dazu eingerichtet ist, eine Energiequelle durch einen Bearbeitungskopf hindurch auf ein Werkstück zu leiten, wobei die Werkzeugmaschine einen Klemmmechanismus aufweist, um den Bearbeitungskopf oder einen anderen Bearbeitungskopf zeitweise aufzunehmen, um ein Werkstück zu bearbeiten. Der Bearbeitungskopf weist eine oder mehrere Leitmechanismen auf, die dazu eingerichtet sind, die Energiequelle auf ein Werkstück zu lenken, und eine Bearbeitungskopf-Aufnahmeeinrichtung, an der dem Bearbeitungskopf bei Verwendung ein Medium oder mehrere Media zugeführt werden können, um die Bearbeitung des Werkstücks zu ermöglichen, wobei die Bearbeitungskopf-Aufnahmeeinrichtung es erlaubt, das Medium oder die Media dem Bearbeitungskopf zuzuführen, wenn der Bearbeitungskopf mit dem Klemmmechanismus verbunden ist. Die Werkzeugmaschine weist weiterhin zumindest einen Mechanismus auf, der dazu eingerichtet ist, eine Zufuhr-Aufnahmeeinrichtung mit der Bearbeitungskopf-Aufnahmeeinrichtung derart zu verbinden, dass, wenn beide Aufnahmeeinrichtungen verbunden sind, das Medium dem Bearbeitungskopf zugeführt wird.

Für bestimmte Arten der spanenden Bearbeitung oder bei Verwendung bestimmter Materialien ist es von Vorteil, wenn der für diese Bearbeitung verwendete Bearbeitungskopf zusätzlich an seiner Außenseite mit Energie versorgt wird. Aufgrund der unterschiedlichen Abmessungen der verschiedenen Bearbeitungsköpfe tritt dabei das Problem auf, dass bei einem Austausch eines Bearbeitungskopfs für die spanende Bearbeitung durch einen Bearbeitungskopf zum Auftragsschweißen die Einrichtung für die Energieversorgung, die für den Bearbeitungskopf für die spanende Bearbeitung, jedoch nicht für den Bearbeitungskopf zum Auftragsschweißen benötigt wird, dem Bearbeitungskopf zum Auftragsschweißen im Weg steht und so einen Austausch der beiden Bearbeitungsköpfe verhindert.

Es ist eine Aufgabe der vorliegenden Erfindung, ein vielseitig einsetzbares und platz- sowie kostensparendes Werkzeugschnittstellensystem bzw. Kopplungsschnittstellensystem für Werkzeugmaschinen bereitzustellen, das insbesondere platz- und kostensparend mit vorteilhaft synergetischen Effekten in Bezug auf vorteilhafte Energieund Signalübertragung bzw. -versorgung sowie auf vorteilhaft effiziente, zeitsparende und vielseitige Werkzeugwechselmöglichkeiten und präzise Werkzeug- und Bearbeitungskopfausrichtung insbesondere bei Anwendung an Hybrid-Werkzeugmaschinen vorteilhaft einsetzbar ist, an denen ggf. zusätzlich zu einer herkömmlichen zerspanenden Bearbeitung weitere Bearbeitungsmöglichkeiten kombinierbar sind, wie z.B. mit elektrische Verbraucher aufweisenden Werkzeugschnittstelleneinheiten, die z.B. in der Ultraschall-Bearbeitung Anwendung finden, und/oder in Verbindung mit Materialauftrags-Bearbeitungsköpfen zum Auftragen von Material an der herkömmlich materialabtragend arbeitenden Werkzeugmaschine.

Eine weitere Aufgabe der vorliegenden Erfindung ist es daher, ein Kopplungssystem für eine Werkzeugmaschine bereitzustellen, durch das an derselben Bearbeitungskopfaufnahme abwechselnd verschiedene Werkzeugschnittstellen bzw. Bearbeitungsköpfe aufgenommen werden können, so dass sowohl eine materialabtragende bzw. spanende Werkstückbearbeitung als auch eine materialauftragende Werkstückbearbeitung z.B. Auftragsschweißen effizient, kostensparend, platzsparend und ohne Einschränkungen durchgeführt werden kann.

### Zusammenfassung der Erfindung

Gemäß einem Aspekt der Erfindung wird zur Lösung der vorstehend genannten Aufgaben ein System zur Verwendung an einer Spindelvorrichtung einer Werkzeugmaschine gemäß Anspruch 1 bzw. eine Kopplungsschnittstelleneinheit zur Verwendung in einem derartigen System gemäß Anspruch 11 vorgeschlagen. Die abhängigen Ansprüche bzw. Kombinationen der abhängigen Ansprüche betreffen bevorzugte Ausführungsbeispiele.

Gemäß einem Aspekt der Erfindung wird ein System zur Verwendung an einer Spindelvorrichtung einer Werkzeugmaschine vorgeschlagen.

Das System kann eine Energieübertragungseinheit mit einer Sendespuleneinheit zur berührungslosen Übertragung elektrischer Energie auf eine Empfängerspuleneinheit einer Werkzeugschnittstelleneinheit umfassen. Die Werkzeugschnittstelleneinheit kann die Empfängerspuleneinheit, einen elektrischen Verbraucher und/oder einen Werkzeugschnittstellenabschnitt zur Aufnahme der Werkzeugschnittstelleneinheit an einer Werkzeugaufnahme einer Arbeitsspindel der Spindelvorrichtung aufweisen. Gegebenenfalls können auch mehrere Energieübertragungseinheiten unterschiedlicher Dimensionierungen für mehrere Werkzeugschnittstelleneinheiten unterschiedlicher Dimensionierungen bereitgestellt werden, wobei bevorzugt ein jeweiliges Kopplungselement der Energieübertragungseinheiten jeweils gleich ausgebildet ist, zur Kopplung an eine einzige Kopplungsschnittstelleneinheit.

Das System kann eine Kopplungsschnittstelleneinheit mit einem an der Spindelvorrichtung befestigbaren Schnittstellenkörperelement und einem zweiten Kopplungselement aufweisen, wobei das zweite Kopplungselement bevorzugt dazu eingerichtet ist, mittels einer lösbaren Verbindung an ein erstes Kopplungselement der Energieübertragungseinheit(en) angekoppelt zu werden.

Gemäß einer bevorzugten beispielhaften Ausführungsform können die ersten und zweiten Kopplungselemente vorzugsweise jeweils ein oder mehrere Steckverbindungselemente aufweisen, vorzugsweise derart, dass das eine oder die mehreren Steckverbindungselemente des ersten Kopplungselements mit dem einen oder den mehreren Steckverbindungselementen des zweiten Kopplungselements dazu eingerichtet sind, zur lösbaren Befestigung des ersten Kopplungselements an dem zweiten Kopplungselement eine lösbare Steckverbindung herzustellen.

Gemäß einer bevorzugten beispielhaften Ausführungsform können die ersten und zweiten Kopplungselemente vorzugsweise jeweils miteinander verbindbare elektrische Kontaktabschnitte aufweisen, vorzugsweise zur Herstellung einer elektrischen Verbindung zwischen den ersten und zweiten Kopplungselementen, wenn das erste Kopplungselement an dem zweiten Kopplungselement lösbar befestigt ist.

Gemäß einer bevorzugten beispielhaften Ausführungsform kann das erste Kopplungselement vorzugsweise elektrische Leitungsführungen aufweisen, die die Sendespuleneinheit der Energieübertragungseinheit vorzugsweise mit den elektrischen Kontaktabschnitten des ersten Kopplungselements elektrisch verbinden.

Gemäß einer bevorzugten beispielhaften Ausführungsform kann das zweite Kopplungselement vorzugsweise elektrische Leitungsführungen aufweisen, die die elektrischen Kontaktabschnitte des zweiten Kopplungselements vorzugsweise mit an dem Schnittstellenkörperelement der Kopplungsschnittstelleneinheit angeordneten elektrischen Anschlusselementen zum Anschluss externer elektrischer Leitungsführungen elektrisch verbinden.

Gemäß einer bevorzugten beispielhaften Ausführungsform kann die Kopplungsschnittstelleneinheit vorzugsweise einen elektrisch, hydraulisch und/oder pneumatisch steuerbaren Verriegelungsmechanismus zum Ent- und/oder Verriegeln der lösbaren Befestigung zwischen den ersten und zweiten Kopplungselementen aufweisen.

Gemäß einer bevorzugten beispielhaften Ausführungsform kann die Kopplungsschnittstelleneinheit vorzugsweise an dem Schnittstellenkörperelement angeordnete elektrische, hydraulische und/oder pneumatische Anschlusselemente zur Steuerung des Verriegelungsmechanismus aufweisen.

Gemäß einer bevorzugten beispielhaften Ausführungsform kann das Schnittstellenkörperelement der Kopplungsschnittstelleneinheit vorzugsweise mittels einer Schraubverbindung an die Spindelvorrichtung befestigbar sein.

Gemäß einer bevorzugten beispielhaften Ausführungsform kann das System weiterhin zusätzlich oder alternativ einen an der Werkzeugmaschine anbringbaren Kopplungselementhalter mit einer Kopplungselementaufnahme zur haltenden Aufnahme der Energieübertragungseinheit umfassen, wenn das erste Kopplungselement der Energieübertragungseinheit von dem zweiten Kopplungselement der Kopplungsschnittstelleneinheit entkoppelt ist.

Gemäß einer bevorzugten beispielhaften Ausführungsform kann das System weiterhin zusätzlich oder alternativ einen Kopplungselementadapter mit einem dritten Kopplungselement aufweisen, das vorzugsweise dazu eingerichtet ist, vorzugsweise analog zu dem ersten Kopplungselement der Energieübertragungseinheit an dem zweiten Kopplungselement der Kopplungsschnittstelleneinheit mittels einer lösbaren Verbindung angekoppelt zu werden, wenn das erste Kopplungselement der Energieübertragungseinheit von dem zweiten Kopplungselement der Kopplungsschnittstelleneinheit entkoppelt ist.

Gemäß einer bevorzugten beispielhaften Ausführungsform können die dritten und zweiten Kopplungselemente vorzugsweise jeweils ein oder mehrere Steckverbindungselemente aufweisen, vorzugsweise derart, dass das eine oder die mehreren Steckverbindungselemente des dritten Kopplungselements vorzugsweise mit dem einen oder den mehreren Steckverbindungselementen des zweiten Kopplungselements dazu eingerichtet sind, zur lösbaren Befestigung des dritten Kopplungselements an dem zweiten Kopplungselement eine lösbare Steckverbindung herzustellen.

Gemäß einer bevorzugten beispielhaften Ausführungsform kann das dritte Kopplungselement vorzugsweise auf der den Steckverbindungselementen für die Steckverbindung mit dem zweiten Kopplungselement gegenüberliegenden Seite ein Befestigungselement aufweisen, zur lösbaren Befestigung an einem weiteren Befestigungselement, das vorzugsweise an einer an der Werkzeugaufnahme der Arbeitsspindel der Spindelvorrichtung aufnehmbaren Materialauftragsbearbeitungsvorrichtung befestigbar ist.

Gemäß einer bevorzugten beispielhaften Ausführungsform kann das System zusätzlich oder alternativ die Werkzeugschnittstelleneinheit mit der Empfängerspuleneinheit umfassen.

Gemäß einer bevorzugten beispielhaften Ausführungsform kann die Werkzeugschnittstelleneinheit vorzugsweise weiterhin auf einer dem Werkzeugschnittstellenabschnitt gegenüberliegenden Seite einen Werkzeugaufnahmeabschnitt zur Aufnahme eines Werkzeugs aufweisen.

Gemäß einer bevorzugten beispielhaften Ausführungsform kann die Werkzeugschnittstelleneinheit vorzugsweise als elektrischen Verbraucher einen Vibrationsantrieb aufweisen, der vorzugsweise dazu eingerichtet ist, eine Schwingung der Werkzeugschnittstelleneinheit anzutreiben, insbesondere vorzugsweise im Ultraschall-Frequenzbereich.

Gemäß einem weiteren Aspekt der Erfindung wird eine Kopplungsschnittstelleneinheit zur Verwendung in einem vorstehend beschriebenen System zur Verwendung an einer Spindelvorrichtung einer Werkzeugmaschine vorgeschlagen. Die Kopplungsschnittstelleneinheit umfasst vorzugsweise ein an der Spindelvorrichtung befestigbares Schnittstellenkörperelement und ein zweites Kopplungselement, das dazu eingerichtet ist, mittels einer lösbaren Verbindung an ein erstes Kopplungselement einer Energieübertragungseinheit des Systems angekoppelt zu werden.

Gemäß einem weiteren Aspekt der Erfindung wird eine Energieübertragungseinheit zur Verwendung in einem vorstehend beschriebenen System zur Verwendung an einer Spindelvorrichtung einer Werkzeugmaschine vorgeschlagen. Die Energieübertragungs-einheit umfasst vorzugsweise eine Sendespuleneinheit zur berührungslosen Übertragung elektrischer Energie auf eine Empfängerspuleneinheit einer Werkzeugschnitt-stelleneinheit, die die Empfängerspuleneinheit, einen elektrischen Verbraucher und einen Werkzeugschnittstellenabschnitt zur Aufnahme der Werkzeugschnittstelleneinheit an einer Werkzeugaufnahme einer Arbeitsspindel der Spindelvorrichtung aufweist, und/oder ein erstes Kopplungselement, das dazu eingerichtet ist, mittels einer lösbaren Verbindung an ein zweites Kopplungselement einer Kopplungsschnittstelleneinheit des Systems angekoppelt zu werden.

Nebengeordnet werden als weitere Aspekte der vorliegenden Erfindung weiterhin voreschlagen: eine Spindelvorrichtung zur Verwendung an einer Werkzeugmaschine, an der eine Kopplungsschnittstelleneinheit gemäß dem vorstehend beschriebenen Aspekt oder eine Kopplungsschnittstelleneinheit eines vorstehend beschriebenen Systems befestigt ist, und eine Werkzeugmaschine mit einer derartigen Spindelvorrichtung.

Zusammenfassend wird ein vielseitig einsetzbares und platz- sowie kostensparendes Werkzeugschnittstellensystem bzw. Kopplungsschnittstellensystem für Werkzeugmaschinen bereitgestellt, das insbesondere platz- und kostensparend mit vorteilhaft synergetischen Effekten in Bezug auf vorteilhafte Energie- und Signalübertragung bzw. -versorgung sowie auf vorteilhaft effiziente, zeitsparende und vielseitige Werkzeugwechselmöglichkeiten und präzise Werkzeug- und Bearbeitungskopfausrichtung insbesondere bei Anwendung an Hybrid-Werkzeugmaschinen vorteilhaft einsetzbar ist, an denen ggf. zusätzlich zu einer herkömmlichen zerspanenden Bearbeitung weitere Bearbeitungsmöglichkeiten kombinierbar sind, wie z.B. mit elektrische Verbraucher aufweisenden Werkzeugschnittstelleneinheiten, die z.B. in der Ultraschall-Bearbeitung Anwendung finden, und/oder in Verbindung mit Materialauftrags-Bearbeitungsköpfen zum Auftragen von Material an der herkömmlich materialabtragend arbeitenden Werkzeugmaschine.

### Kurzbeschreibung der Figuren

Fig. 1 zeigt eine bespielhafte Perspektivdarstellung einer Werkzeugmaschine gemäß einem Ausführungsbeispiel der Erfindung;
Figs. 2A bis 2E zeigen beispielhafte Ausführungsformen eines Spindelträgerschlittens gemäß einem Ausführungsbeispiel der Erfindung;
Fig. 3 zeigt eine beispielhafte perspektivische Detaildarstellung einer Werkzeugaufnahme einer Arbeitsspindel gemäß einem Ausführungsbeispiel der Erfindung;
Fig. 4 zeigt eine bespielhafte Perspektivdarstellung einer Spindelvorrichtung gemäß einem Ausführungsbeispiel der Erfindung;
Figs. 5A und 5B zeigen beispielhafte perspektivische Detaildarstellungen der Spindelvorrichtung gemäß Fig. 4 mit eingesetzter Werkzeugschnittstelleneinheit;
Figs. 6A und 6B zeigen beispielhafte perspektivische Detaildarstellungen der Spindelvorrichtung gemäß Fig. 4 ohne eingesetzte Werkzeugschnittstelleneinheit;
Figs. 7A bis 7C zeigen beispielhafte perspektivische Detaildarstellungen eines Werkzeug-Kopplungssystems gemäß einem Ausführungsbeispiel der Erfindung;
Figs. 8A und 8B zeigen beispielhafte perspektivische Detaildarstellungen einer Werkzeugschnittstelleneinheit des Werkzeug-Kopplungssystems gemäß Figs. 7A bis 7C;
Figs. 9A und 9B zeigen beispielhafte perspektivische Detaildarstellungen des Werkzeug-Kopplungssystems gemäß Figs. 7A bis 7C ohne Werkzeugschnittstelleneinheit;
Figs. 10A und 10B zeigen jeweils beispielhafte perspektivische Detaildarstellungen einer Kopplungsschnittstelleneinheit und einer Energieübertragungseinheit des Werkzeug-Kopplungssystems gemäß Figs. 7A bis 7C;
Figs. 11A und 11B zeigen beispielhafte perspektivische Detaildarstellungen der Energieübertragungseinheit gemäß Fig. 10B, und Fig. 11C zeigt eine beispielhafte Unteransicht der Energieübertragungseinheit gemäß Fig. 10B;
Fig. 12A zeigt eine beispielhafte Perspektivdarstellung einer Energieübertragungseinheit gemäß einem Ausführungsbeispiel der Erfindung und Fig. 12B zeigt eine beispielhafte Perspektivdarstellung der Energieübertragungseinheit gemäß Fig. 12A in einem Kopplungselementhalter;
Figs. 13A bis 13D zeigen beispielhafte perspektivische Detaildarstellungen der Spindelvorrichtung gemäß Fig. 4 mit eingesetzter Materialauftragsvorrichtung gemäß einem Ausführungsbeispiel der Erfindung;
Fig. 14 zeigt eine beispielhafte perspektivische Detaildarstellung der Spindelvorrichtung gemäß Fig. 4 ohne eingesetzte Materialauftragsvorrichtung;
Figs. 15A und 15B zeigen beispielhafte perspektivische Detaildarstellungen eines Kopplungselementadapters eines Werkzeug-Kopplungssystems gemäß einem Ausführungsbeispiel der Erfindung; und
Fig. 16 zeigt eine beispielhafte Perspektivdarstellung der Materialauftragsvorrichtung gemäß Figs. 13A bis 13D.

### Detaillierte Beschreibung der Figuren und bevorzugter Ausführungsbeispiele der vorliegenden Erfindung

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen. Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

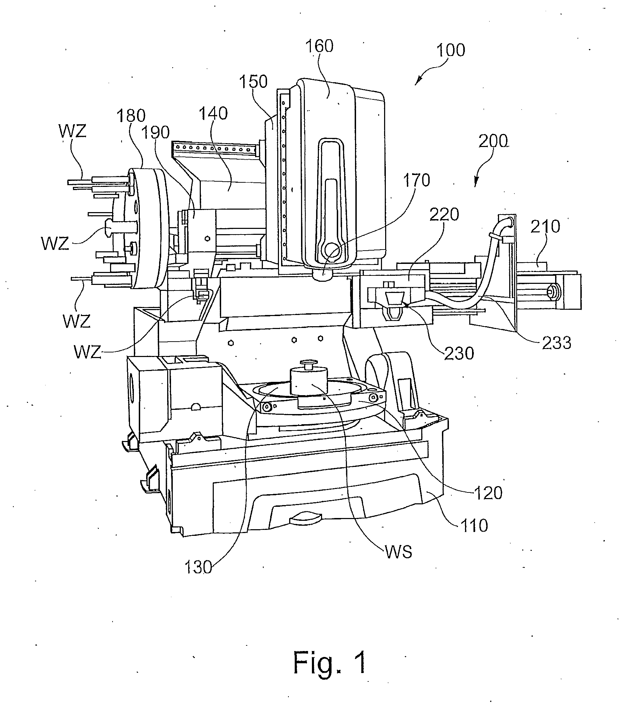

Fig. 1 zeigt eine bespielhafte Perspektivdarstellung einer Werkzeugmaschine 100 gemäß einem Ausführungsbeispiel der Erfindung.

Die Werkzeugmaschine 100 umfasst beispielhaft ein Maschinenbett 110 auf dem beispielhaft ein Schwenktisch 120 angeordnet ist mit einem beispielhaft auf dem Schwenktisch 120 drehbar gelagerten Drehtisch 130, auf dem bespielhaft ein Werkstück WS zur Bearbeitung an der Werkzeugmaschine 100 eingespannt ist.

Bespielhaft umfasst die Werkzeugmaschine 100 somit zwei rotatorisch steuerbare Achsen zur Rotation des auf dem Drehtisch 130 eingespannten Werkstücks WS, beispielhaft um eine in Bezug auf das Maschinenbett 110 horizontal ausgerichtete Schwenkachse, um die der Schwenktisch 120 auf dem Maschinenbett 110 schwenkbar ist, und um ein in Bezug auf den Schwenktisch 120 vertikal ausgerichtete Rotationsachse, um die der Drehtisch 130 auf dem Schwenktisch 120 drehbar ist.

In dieser bespielhaften Ausführung ist die Rotationsachse des Drehtischs 130 nicht absolut feststehend in Bezug auf das Maschinenbett 110, sondern verschwenkt mit dem Verschwenken des Schwenktisches 120 mit. In weiteren Ausführungen der Erfindung ist es möglich nur eine, mehr als zwei oder auch gar keine Dreh- bzw. Schwenkachsen vorzusehen. Zudem ist es in weiteren Ausführungsbeispielen möglich, unabhängige Schwenk- bzw. Drehachsen vorzusehen, z.B. indem eine Dreh- bzw. Schwenkachse das Werkstück rotiert und eine andere Dreh- bzw. Schwenkachse das Werkzeug bzw. den Spindelkopf rotiert.

Die Werkzeugmaschine 100 umfasst weiterhin beispielhaft eine Achsschlitten-Baugruppe mit einem ersten Achsschlitten 140, der auf einem hinteren Maschinenständer des Maschinenbetts 110 angeordnet ist und auf an dem Maschinenständer befestigten Längsachs-Schlittenführungen geführt ist. Auf den Längsachs-Schlittenführungen ist der erste Achsschlitten 140 in der Richtung einer X-Achse der Werkzeugmaschine 100 beispielhaft horizontal linear verfahrbar (in Fig. 1 in einer horizontal von vorne nach hinten ausgerichteten Richtung).

An der Vorderseite des ersten Achsschlittens 140 sind beispielhaft horizontal ausgerichtete Querachs-Schlittenführungen angeordnet, auf denen ein zweiter Achsschlitten 150 beispielhaft in der Richtung einer Y-Achse der Werkzeugmaschine 100 beispielhaft horizontal und quer bzw. senkrecht zur Richtung der X-Achse des ersten Achsschlittens 140 linear verfahrbar (in Fig. 1 in einer horizontal von links nach rechts ausgerichteten Richtung).

An der Vorderseite des zweiten Achsschlittens 150 ist ein Spindelkopf mit einem Spindelkopfgehäuse 160 gehalten. Der Spindelkopf ist beispielhaft in der Richtung einer Z-Achse der Werkzeugmaschine 100 beispielhaft vertikal linear verfahrbar, d.h. insbesondere beispielhaft jeweils quer bzw. senkrecht zu den Richtungen der X- und Y-Achsen.

An der Unterseite des Spindelkopfes mit dem Spindelkopfgehäuse 160 ist eine Arbeitsspindel einer Spindelvorrichtung 170 angeordnet, deren Spindelachse beispielhaft vertikal und insbesondere beispielhaft parallel zur Richtung der Z-Achse ausgerichtet ist.

In dem Ausführungsbeispiel gemäß Fig. 1 sind folglich beispielhaft drei unabhängig steuerbare Linearachsen vorgesehen (z.B. steuerbar durch eine nicht dargestellte Steuereinrichtung einer numerischen Werkzeugmaschinensteuerung ggf. mit CNC-Steuerungseinheit und/oder PLC-Steuerungseinheit, ggf. auf Basis von NC-Programmen und/oder manuell an einem Bedienpult der Werkzeugmaschine 100 eingegebenen Steuerbefehlen). Beispielhaft können alle drei Linearachsen unabhängig voneinander oder gleichzeitig das an der Arbeitsspindel der Spindelvorrichtung 170 aufgenommene Werkzeug aktiv in Bezug auf die Position des auf dem Drehtisch 130 eingespannten Werkstücks WS verfahren.

In weiteren Ausführungsbeispielen können auch ein, zwei oder mehr als drei unabhängig verfahrbare Linearachsen vorgehsehen sein, bzw. es können auch ein, zwei, drei oder mehr Linearachsen zum Verfahren des Werkstücks bzw. des Drehtischs 130 und/oder des Schwenktischs 120 vorgesehen sein.

Weiterhin umfasst die Werkzeugmaschine 100 beispielhaft ein Werkzeugmagazin 180, das dazu eingerichtet ist, eine Mehrzahl von Werkzeugen, Werkzeugschnittstellen und/oder Werkzeugen mit Werkzeugschnittstellen vorzuhalten. Beispielhaft ist das Werkzeugmagazin 180 als Kettenmagazin ausgebildet, jedoch können auch andere Typen von Werkzeugmagazinen vorgesehen sein, wie z.B. Regalmagazine oder Radmagazine usw.

Zudem umfasst die Werkzeugmaschine 100 beispielhaft einen zwischen einer Werkzeugwechselposition der Arbeitsspindel der Spindelvorrichtung 170 und einer Werkzeugentnahme- bzw. Werkzeugeingabeposition des Werkzeugmagazins 180 linear verfahrbare Werkzeugwechselvorrichtung 190. Die Werkzeugwechselvorrichtung 190 ist dazu eingerichtet, an der Werkzeugentnahme- bzw. Werkzeugeingabeposition des Werkzeugmagazins 180 ein Werkzeug aus dem Werkzeugmagazin 180 zu entnehmen, um dieses in einem Werkzeugwechsel der Arbeitsspindel zuzuführen, und ein an der Werkzeugwechselposition aus der Arbeitsspindel der Spindelvorrichtung 170 im Werkzeugwechsel entnommenes Werkzeug dem Werkzeugmagazin 180 zuzuführen.

Bevorzugt umfasst die Werkzeugwechselvorrichtung 190 ggf. einen verschwenkbaren Doppelgreifer zum Halten bzw. Aufnehmen zweier Werkzeuge bzw. Werkzeugschnittstellen, ggf. mit einem Greiferabschnitt zum Aufnehmen eines Werkzeugs aus der Spindel oder dem Werkzeugmagazin und ein anderer Greiferabschnitt mit einem in der Arbeitsspindel bzw. dem Werkzeugmagazin einzusetzenden Werkzeug.

Auf der dem Werkzeugmagazin 180 gegenüberliegenden Seite des Maschinenbetts 110 umfasst die Werkzeugmaschine 100 gemäß Fig. 1 weiterhin beispielhaft eine an der Arbeitsspindel der Spindelvorrichtung 170 einsetzbare, einspannbare und/oder aufnehmbare Materialauftragsvorrichtung 230 eines Materialauftrags-Bearbeitungs-systems 200, wobei die Materialauftragsvorrichtung 230 beispielhaft an einem dritten Achsschlitten 220 gehalten ist.

Der dritte Achsschlitten 220 ist beispielhaft horizontal linear verfahrbar auf einer Schlittenführung 210 geführt, und ist dazu eingerichtet, zu der Arbeitsspindel der Spindelvorrichtung 170 verfahren zu werden, um die Materialauftragsvorrichtung 230 an der Arbeitsspindel der Spindelvorrichtung 170 einzusetzen, einzuspannen und/oder aufzunehmen, insbesondere anstatt eines Werkzeugs WS bzw. einer Werkzeugschnittstelle aus dem Werkzeugmagazin 180.

Während in dem Werkzeugmagazin 180 hauptsächlich materialabtragende bzw. insbesondere abspanende Werkzeuge, wie z.B. Fräs- bzw. Bohrwerkzeuge, vorgehalten werden können, die zum Abtragen bzw. insbesondere zerspanenden Abtragen von Material von dem an dem Drehtisch 130 eingespannten Werkstück WS verwendbar sind, ist das Materialauftrags-Bearbeitungssystem 200 beispielhaft dazu eingerichtet, mittels einer Materialauftragsvorrichtung 230 Material auf dem an dem Drehtisch 130 eingespannten Werkstück WS aufzutragen.

Bevorzugt kann das Materialauftrags-Bearbeitungssystem 200 hierbei eine Laserkopf-Bearbeitungseinheit als Materialauftragsvorrichtung 230 aufweisen. Die Materialauftragsvorrichtung 230 ist dazu eingerichtet, Material z.B. durch Auftragsschweißen auf dem an dem Drehtisch 130 eingespannten Werkstück WS aufzutragen. Eine beispielhafte Laserkopf-Bearbeitungseinheit als spezielleres Beispiel einer Materialauftragsvorrichtung 230 zum Auftragsschweißen ist z.B. in der DE 10 2013 224 649 A1 beschrieben.

Eine flexible Leitungszuführung zu dem Materialauftrags-Bearbeitungssystem 200 bzw. zu der Materialauftragsvorrichtung 230 ist in Fig. 1 beispielhaft durch die Zuführungsleitung 233 gewährleistet. Insbesondere umfasst die Zuführungsleitung 233 ggf. elektrische Versorgungsleitungen für die Zufuhr elektrischer Energie zu der Materialauftragsvorrichtung 230 (z.B. zur Energieversorgung eines Auftragsschweißkopfes bzw. Laserkopfes, eines einen oder mehrere Sensoren und/oder Messeinheiten umfassendes Prozessüberwachungssystems und/oder einer Kamera zur visuellen Prozessüberwachung) und/oder elektrische Signalleitungen zum Übertragen von Steuer- oder Regelsignalen und/oder zur Abnahme von Prozessdaten, insbesondere z.B. Sensorsignale, Messsignale und/oder ein Videoausgabesignal.

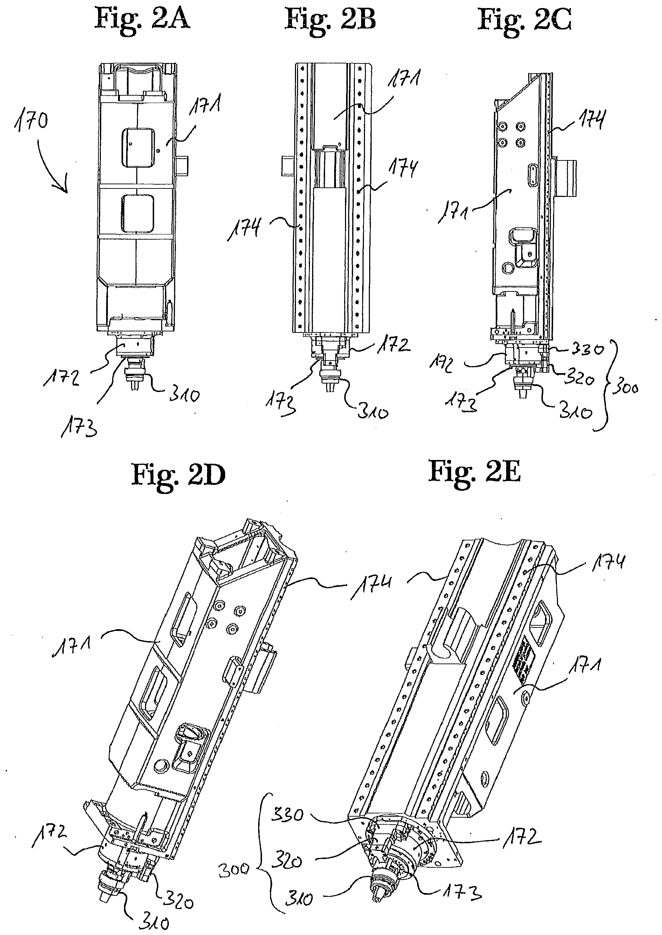

Figs. 2A bis 2E zeigen beispielhafte Ausführungsformen eines Spindelträgerschlittens 171 einer Spindelvorrichtung 170 gemäß einem Ausführungsbeispiel der Erfindung (z.B. gemäß einer beispielhaften Ausführung für die Verwendung an der beispielhaften Werkzeugmaschine 100 gemäß Fig. 1 unter dem Spindelkopfgehäuse 160). Fig. 2A zeigt beispielhaft eine Vorderansicht des Spindelträgerschlittens 171, Fig. 2B zeigt beispielhaft eine Rückansicht des Spindelträgerschlittens 171, Fig. 2C zeigt beispielhaft eine Seitenansicht des Spindelträgerschlittens 171 und Figs. 2D und 2E zeigen beispielhafte Perspektivdarstellungen des Spindelträgerschlittens 171.

Der Spindelträgerschlitten 171 der Spindelvorrichtung 170 hält eine Arbeitsspindel 172, die eine Werkzeugaufnahme 173 (bzw. Werkzeugschnittstellenaufnahme 173) zur Aufnahme bzw. zum Einspannen eines Werkzeugs bzw. einer Werkzeugschnittstelle an der Arbeitsspindel 172 aufweist. An der Werkzeugaufnahme 173 ist in den Figs. 2A bis 2E beispielhaft eine Werkzeugschnittstelleneinheit 310 aufgenommen bzw. eingespannt, die im weiteren Verlauf noch detaillierter beschrieben wird.

Grundsätzlich ist die Werkzeugaufnahme 173 jedoch allgemein dazu eingerichtet, eine Werkzeugschnittstelle aufzunehmen bzw. einzuspannen, derart, dass die an der Werkzeugaufnahme 173 aufgenommene bzw. eingespannte Werkzeugschnittstelle bzw. ein daran befestigtes, eingespanntes bzw. gehaltenes Werkzeug zur Erzeugung einer Zerspanbewegung an der Arbeitsspindel 172 rotatorisch angetrieben werden kann. Die Spindelvorrichtung 170 umfasst zum rotatorischen Antreiben der Arbeitsspindel 172 bevorzugt einen (nicht dargestellten) Spindelmotor bzw. Spindelantrieb, der bevorzugt in bzw. an dem Spindelträgerschlitten 171 angeordnet ist.

Auf der Rückseite des Spindelträgerschlittens 171 sind beispielhaft Schlittenführungen 174 angeordnet. An diesen Schlittenführungen 174 kann der Spindelträgerschlitten 171 z.B. vertikal linear verfahrbar an dem zweiten Werkzeugschlitten 150 gelagert bzw. gehalten sein (siehe Fig. 1, hier kann der Spindelträgerschlitten 174 in dem Spindelkopfgehäuse angeordnet sein).

An der Unterseite des Spindelträgerschlittens 171 ist neben bzw. benachbart zu der Arbeitsspindel 172 und der Werkzeugaufnahme 173 ein Werkzeug-Kopplungssystem 300 angeordnet, umfassend eine Energieübertragungseinheit 320 und eine Kopplungsschnittstelleneinheit 330. Beispielhaft wird hierbei auch die Werkzeugschnittstelleneinheit 310 dem Werkzeug-Kopplungssystem 300 zugerechnet.

Die Werkzeugaufnahme 173 ist beispielsweise dazu eingerichtet, Werkzeugschnittstellen des Typs Hohlschaftkegel bzw. Hohlschaftkegelschnittstelle aufzunehmen bzw. einzuspannen. In weiteren Ausführungsbeispielen kann die Werkzeugaufnahme 173 jedoch zusätzlich oder alternativ andersartig ausgestaltete Werkzeugschnittstellen aufnehmen bzw. einspannen, wie z.B. Steilkegel und/oder Morsekegel.

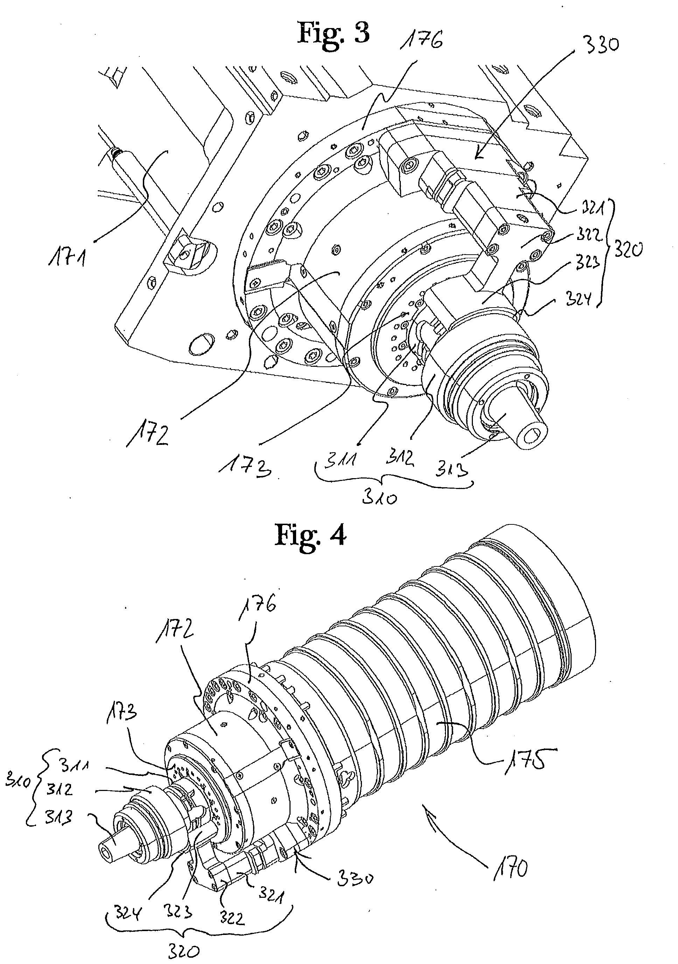

Fig. 3 zeigt eine beispielhafte perspektivische Detaildarstellung einer Werkzeugaufnahme 173 einer Arbeitsspindel 172 gemäß einem Ausführungsbeispiel der Erfindung z.B. gemäß Figs. 2A bis 2E. Fig. 4 zeigt eine bespielhafte Perspektiv-darstellung einer Spindelvorrichtung 170 gemäß einem Ausführungsbeispiel der Erfindung, z.B. die Spindelvorrichtung 170 die an dem Spindelträgerschlitten 171 gemäß Figs. 2A bis 2E eingebaut sein kann.

Die Spindelvorrichtung 170 umfasst beispielhaft ein Spindelgehäuse 175, in dem z.B. der Spindelantrieb bzw. Spindelmotor angeordnet sein kann, und ein an dem Spindelgehäuse 175 beispielhaft auf der Seite der Werkzeugaufnahme 173 angebrachter Befestigungsrahmen 176, der beispielhaft als ringförmiger Befestigungsrahmen ausgebildet ist, an dem die Spindelvorrichtung 170 z.B. an dem Spindelträgerschlitten 171 angebracht bzw. befestigt werden kann.

Beispielhaft ist neben bzw. benachbart zu der Arbeitsspindel 172 mit Werkzeugaufnahme 173 die Kopplungsschnittstelleneinheit 330 des Werkzeug-Kopplungssystems 300 bevorzugt orts- und drehfest befestigt, z.B. durch eine fixierte Schraubverbindung. An der Kopplungsschnittstelleneinheit 330 ist die Energieübertragungseinheit 320 des Werkzeug-Kopplungssystems 300 bevorzugt lösbar und bevorzugt orts- und drehfest befestigt, z.B. über ein lösbare Rastverbindung.

Die Energieübertragungseinheit 320 des Werkzeug-Kopplungssystems 300 gemäß Figs. 3 und 4 umfasst beispielhaft ein Kopplungselement 321, das an der Kopplungsschnittstelleneinheit 330 bevorzugt lösbar und bevorzugt orts- und drehfest befestigt ist. Beispielhaft auf der der Kopplungsschnittstelleneinheit 330 gegenüberliegenden Seite des Kopplungselements 321 ist ein Spulenhalterelement 322 angeordnet, das beispielhaft eine Sendespuleneinheit 323 hält, in der eine Sendespule bzw. ein Sendespulensegment 324 angeordnet ist.

Die Werkzeugschnittstelleneinheit 310 umfasst beispielhaft einen beispielhaft in der Werkzeugaufnahme 173 der Arbeitsspindel 172 aufgenommenen Werkzeugschnittstellenkörper 311, der beispielhaft als Hohlschaftkegel bzw. Hohlschaftkegelabschnitt ausgebildet ist. Des Weiteren umfasst die Werkzeugschnittstelleneinheit 310 auf der dem Werkzeugschnittstellenkörper 311 gegenüberliegenden Seite beispielhaft weiterhin einen Werkzeugaufnahmeabschnitt 313 zur Aufnahme bzw. zum Einspannen eines Werkzeugs, wie z.B. eines Fräs- oder Bohrwerkzeugs. Zwischen dem Werkzeugaufnahmeabschnitt 313 und dem Werkzeugschnittstellenkörper 311 umfasst die Werkzeugschnittstelleneinheit 310 beispielhaft eine Empfängerspuleneinheit 312, in der eine Empfängerspule 314 angeordnet sein kann.

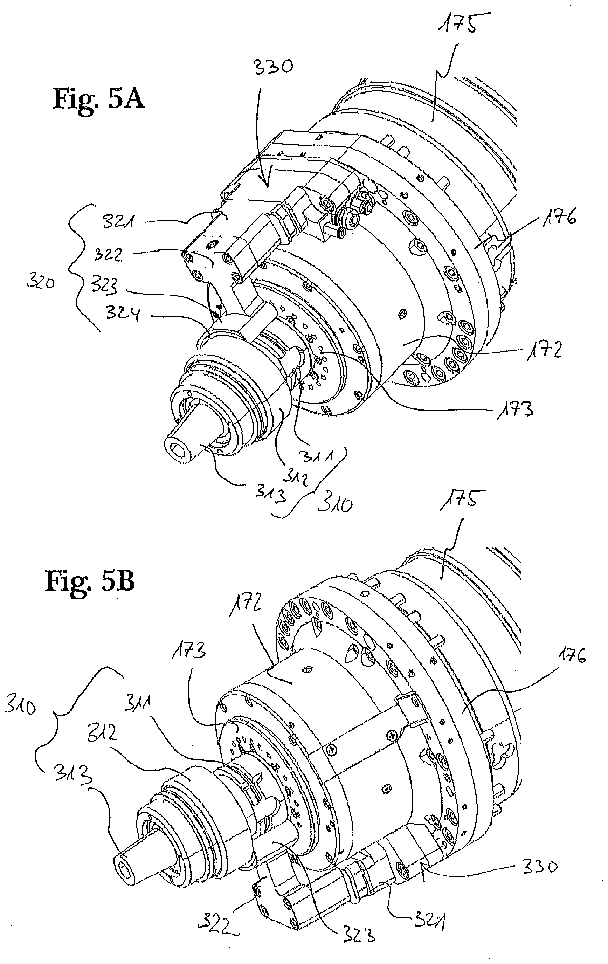

Figs. 5A und 5B zeigen beispielhafte perspektivische Detaildarstellungen der Spindelvorrichtung 170 gemäß Fig. 4 mit eingesetzter Werkzeugschnittstelleneinheit 310. Das Werkzeug-Kopplungssystem 300 mit der Kopplungsschnittstelleneinheit 330 und der Energieübertragungseinheit 320 ist derart an bzw. neben der Arbeitsspindel 172 bzw. der Werkzeugaufnahme 173 angeordnet, dass das Sendespulensegment 324 der Sendespuleneinheit 323 in axialer Richtung in Bezug auf die Spindelachse gesehen über bzw. zumindest teilweise über der Empfängerspule 324 der Empfängerspuleneinheit 312 der Werkzeugschnittstelleneinheit 310 angeordnet ist. Das heißt insbesondere, dass die Empfängerspule 324 der Empfängerspuleneinheit 312 und die Senderspule bzw. das Senderspulensegment 324 der Sendespuleneinheit 323 sich in axialer Richtung in Bezug auf die Spindelachse gesehen überdecken bzw. teilweise überdecken), wenn diese an der Werkzeugaufnahme 173 der Arbeitsspindel 172 aufgenommen bzw. eingespannt ist.

Jedoch sind die Empfängerspuleneinheit 312 und die Sendespuleneinheit 323 zueinander in diesem Zustand derart zueinander angeordnet, dass ein dünner Luftspalt zwischen der Empfängerspuleneinheit 312 und der Sendespuleneinheit 323 vorgesehen ist, derart, dass bei Antrieb durch die Arbeitsspindel 172 die in der Werkzeugaufnahme 173 aufgenommene bzw. eingespannte Werkzeugschnittstelleneinheit 310 ungehindert um die Spindelachse rotieren kann, ohne in Kontakt mit der feststehenden Energieübertragungseinheit 320 zu kommen bzw. an dieser zu schleifen, wobei dennoch über eine magnetische Energieübertragung analog zu einem Transformator elektrische Energie bzw. elektrische Signale berührungslos über den Luftspalt zwischen der Empfängerspuleneinheit 312 und der Sendespuleneinheit 323 übertragen werden können.

Dies ist insbesondere dann vorteilhaft, wenn die Werkzeugschnittstelleneinheit 310 einen oder mehrere elektrische Verbraucher aufweist, der/die während der Bearbeitung des Werkstücks WS bzw. insbesondere während der spindelangetriebenen Rotationsbewegung der Werkzeugschnittstelleneinheit 310 mit elektrischer Energie versorgt werden sollen oder müssen.

In einigen Ausführungsbeispielen der Erfindung umfasst die Werkzeugschnittstelleneinheit 310 bevorzugt einen oder mehrere ansteuerbare Aktoren und/oder einen oder mehrere auslesbare Sensoren (z.B. Temperatursensoren, Vibrationssensoren, oder elektrische, optische, oder induktive Kollisions-Sensoren), die über die berührungslose elektro-magnetische Verbindung zwischen der Empfängerspuleneinheit 312 der Werkzeugschnittstelleneinheit 310 und der Sendespuleneinheit 323 der Energieübertragungseinheit 320 zur Energieversorgung mit elektrischer Energie versorgt und/oder mit elektrischen Steuersignalen angesteuert werden können bzw. von denen über die berührungslose elektro-magnetische Verbindung zwischen der Empfängerspuleneinheit 312 der Werkzeugschnittstelleneinheit 310 und der Sendespuleneinheit 323 der Energieübertragungseinheit 320 elektrische Sensor- oder Regel- bzw. anderweitige Feedbacksignale von der Werkzeugschnittstelleneinheit 310 zurückübertragen werden können.

In besonders bevorzugten Ausführungsbeispielen umfasst die Werkzeugschnittstelleneinheit 310 einen oder mehrere Vibrations-Aktoren bzw. Schwingungsantriebe zur Erzeugung einer Vibration/Schwingung in axialer und/oder radialer Richtung in Bezug auf die Spindelachse bzw. Werkzeugschnittstellenachse, insbesondere bevorzugt im Ultraschall-Frequenzbereich z.B. zur Ultraschallbearbeitung, bei der die zerspanende Rotation des Werkzeugs mit einer Vibration bzw. Schwingung im Ultraschallbereich überlagert wird. Hierzu können z.B. Piezo-Aktoren bzw. Piezo-Elemente zur steuer- bzw. regelbaren Erzeugung der Vibration bzw. Schwingung Verwendung finden. In diesem Zusammenhang sei insbesondere auf die in DE 10 2009 008 227 A1, DE 10 2012 219 254 A1 und DE 10 2013 210 199 A1 beschriebenen Werkzeuge, Werkzeugvorrichtungen und Bearbeitungsverfahren verwiesen.

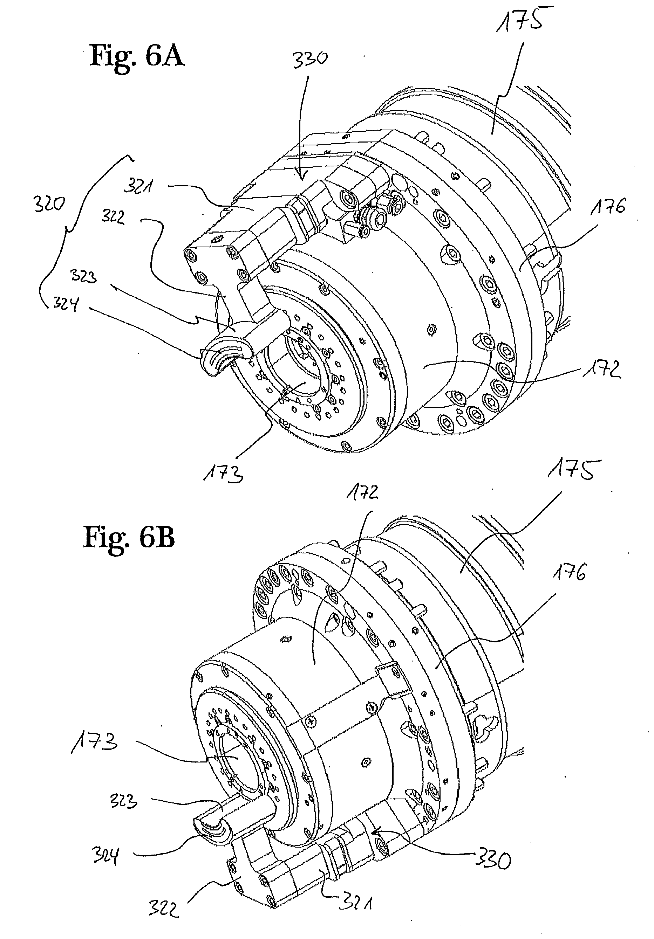

Figs. 6A und 6B zeigen beispielhafte perspektivische Detaildarstellungen der Spindelvorrichtung 170 gemäß Fig. 4 ohne eingesetzte Werkzeugschnittstelleneinheit 310. In den Figs. 6A und 6B ist beispielhaft gezeigt, dass die Sendespuleneinheit 323 der Energieübertragungseinheit 320 mit dem Sendespulensegment 324 beispielhaft nicht eine vollständige Kreisform ausbildet, sondern als Teilkreissegment ausgebildet ist, das nur auf einer Seite der Werkzeugaufnahme 173 der Arbeitsspindel 172 angeordnet bzw. platziert ist. Somit ergibt sich der Vorteil, dass einerseits die Energieübertragungseinheit 320 mit dem Sendespulensegment 324 platzsparend und kostengünstiger bereitgestellt werden kann, und zudem der Raum um die Werkzeugaufnahme 173 trotz Energieübertragungseinheit 320 mit dem Sendespulensegment 324 weitgehend freigehalten werden kann. Somit ist die Arbeitsspindel 172 und die Werkzeugaufnahme 173 gut einsehbar, und zudem ist die Einwechselung einer Werkzeugschnittstelle vereinfacht, selbst wenn die Energieübertragungseinheit 320 mit dem Sendespulensegment 324 an der Arbeitsspindel 172 positioniert bzw. angebracht ist.

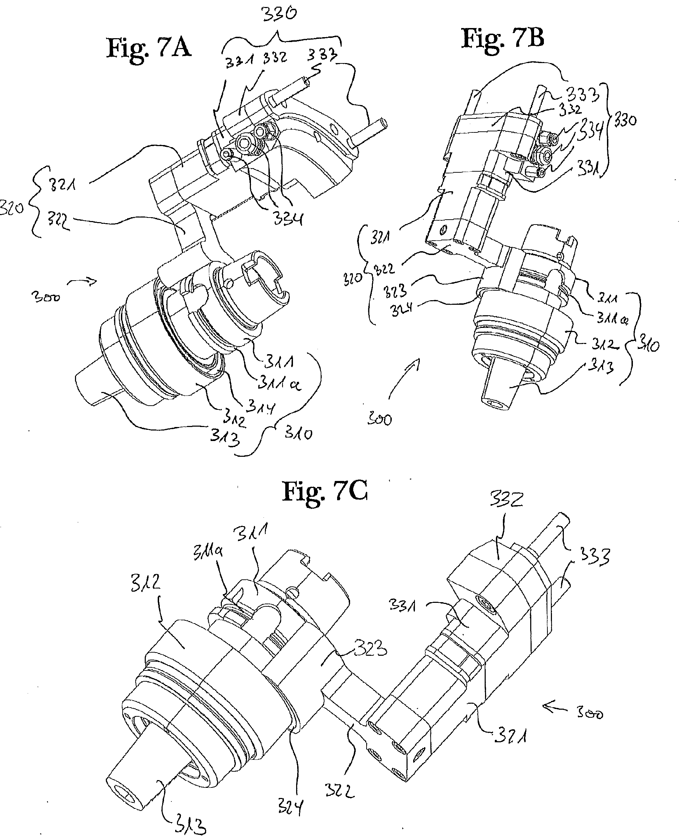

Figs. 7A bis 7C zeigen beispielhafte perspektivische Detaildarstellungen eines Werkzeug-Kopplungssystems 300 gemäß einem Ausführungsbeispiel der Erfindung. Dieses umfasst beispielhaft die zuvor beschriebenen Einheiten mit der Werkzeugschnittstelleneinheit 310, der Energieübertragungseinheit 320 und der Kopplungsschnittstelleneinheit 330.

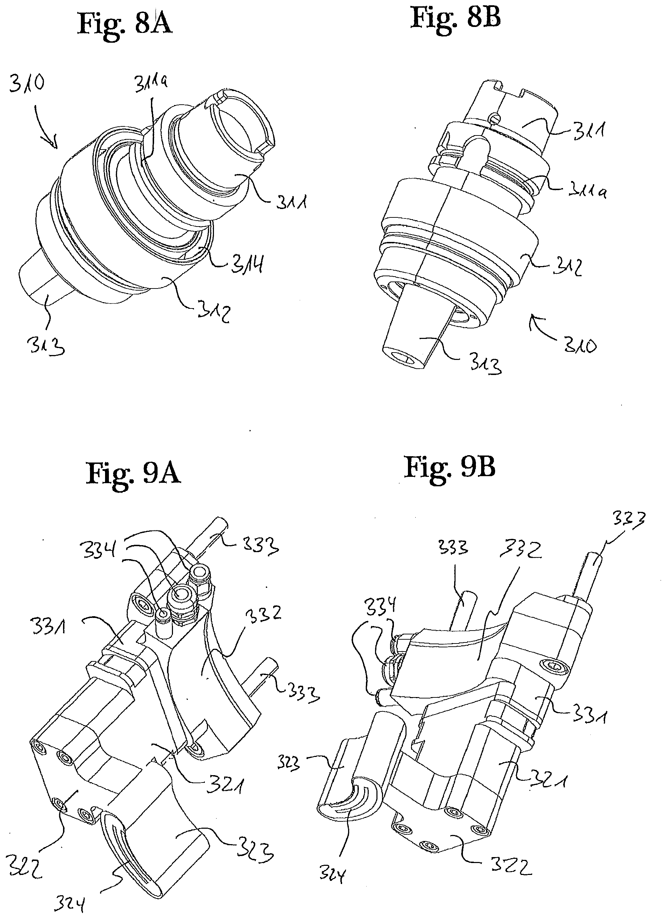

Figs. 8A und 8B zeigen beispielhafte perspektivische Detaildarstellungen der Werkzeugschnittstelleneinheit 310 des Werkzeug-Kopplungssystems 300 gemäß Figs. 7A bis 7C und Figs. 9A und 9B zeigen beispielhafte perspektivische Detaildarstellungen des Werkzeug-Kopplungssystems 300 gemäß Figs. 7A bis 7C ohne Werkzeugschnittstelleneinheit 310.

In den Figs. 7A und 8A ist die Unterseite der Empfängerspuleneinheit 312 der Werkzeugschnittstelleneinheit 310 erkennbar, an der der Abschnitt der Empfängerspule 314 erkennbar ist, der sich beispielhaft ringförmig und beispielhaft vollumfänglich um die Werkzeugschnittstellenachse bzw. in dem Gehäuse der Empfängerspuleneinheit 312 erstreckt. Somit ist vorteilhaft gewährleistet, dass die Empfängerspuleneinheit 312 während der spindelangetriebenen Rotation der Werkzeugschnittstelleneinheit 310 kontinuierlich den berührungslosen Kontakt zu der nur segmentförmig bzw. teilkreissegmentförmig ausgebildeten Sendespuleneinheit 323 der Energieübertragungseinheit 320 halten kann.

Zudem ist in den Figs. 7A bis 7C und 8A bis 8B erkennbar, dass die Werkzeugschnittstelleneinheit 310 beispielhaft eine umfänglich des Werkzeugschnittstellenkörpers 311 eine Greiferrille 311a ausbildet, an der ein Greifer bzw. ein Greifabschnitt eines Werkzeugwechslers bzw. eines Greifers der Werkzeugwechselvorrichtung 190 gemäß Fig. 1 zum Werkzeugwechsel an der Arbeitsspindel 172 die Werkzeugschnittstelleneinheit 310 greifen kann, z.B. um diese mit einem anderen Werkzeug oder einer anderen Werkzeugschnittstelleneinheit 310 auszuwechseln.

Die Kopplungsschnittstelleneinheit 330 umfasst beispielhaft ein Kopplungselement 331, das mit dem Kopplungselement 321 der Energieübertragungseinheit 320 koppelbar ist bzw. an dem das Kopplungselement 321 der Energieübertragungseinheit 320 bevorzugt lösbar und bevorzugt orts- und drehfest befestigbar ist.

Weiterhin umfasst die Kopplungsschnittstelleneinheit 330 beispielhaft weiterhin ein auf der dem Kopplungselement 331 gegenüberliegenden Seite angeordnetes Schnittstellenkörperelement 332 zu Befestigung an der Spindelvorrichtung 170 bzw. dem Spindelträgerschlitten 171, wobei an dem Schnittstellenkörperelement 332 auf der dem Kopplungselement 321 abgewandten Seite Befestigungselemente 333 zur orts- und drehfesten Befestigung (z.B. durch Schraubverbindungen) an der Spindelvorrichtung 170 bzw. an der Arbeitsspindel 172, an dem der Arbeitsspindel 172 benachbarten Abschnitt des Spindel-Befestigungsrahmens 176 oder an einem der Arbeitsspindel 172 benachbarten Abschnitt des Spindelträgerschlittens 171 befestigbar ist.

An dem Schnittstellenkörperelement 332 der Kopplungsschnittstelleneinheit 330 sind seitlich weiterhin eine Mehrzahl von Anschlüssen bzw. Anschlusselementen 334 angeordnet. Die Anschlusselemente 334 ermöglichen z.B. einen externen Anschluss von elektrischen Signal- und/oder Leistungsleitungen über die verbundenen Kopplungselemente zu der Sendespule 324 der Sendespuleneinheit 323 zur elektrischen Energieversorgung der Werkzeugschnittstelleneinheit bzw. zur Ein- und/oder Ausgabe von Steuer, Regel-, und/oder Sensorsignalen. Des Weiteren können hydraulische und/oder pneumatische Anschlüsse vorgesehen sein, z.B. wenn in einigen Ausführungsbeispielen die Kopplung der Kopplungselemente 321 und 331 der Energieübertragungseinheit 320 und der Kopplungsschnittstelleneinheit 330 z.B. pneumatisch und/oder hydraulisch zwischen einem verriegelten oder eingerasteten Verbindungszustand und einem entriegelten oder rastgelösten Verbindungszustand geschaltet werden können. Eine derartige schaltbare Ent- und Verriegelung der Kopplungselemente kann in weiteren Ausführungsbeispielen auch elektrisch gesteuert werden.

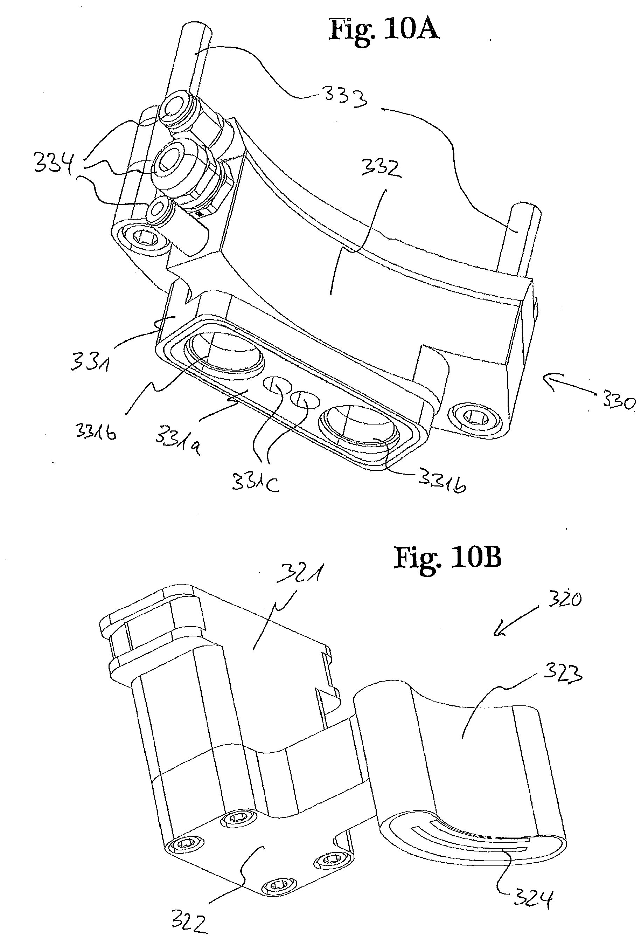

Figs. 10A und 10B zeigen jeweils beispielhafte perspektivische Detaildarstellungen der Kopplungsschnittstelleneinheit 330 und der Energieübertragungseinheit 320 des Werkzeug-Kopplungssystems gemäß Figs. 7A bis 7C, in entkoppeltem bzw. gelösten Zustand. Fig. 10B zeigt die bereits vorstehend beschriebene Energieübertragungseinheit 320 mit der Kopplungselement 321 der Energieübertragungseinheit 320 (das an bzw. mit dem Kopplungselement 331 der Kopplungsschnittstelleneinheit 330 koppelbar bzw. an diesem lösbar befestigbar ist), dem Spulenhalterelement 322, der Sendespuleneinheit 323 und dem Sendespulensegment 324.

Fig. 10A zeigt die bereits vorstehend beschriebene Kopplungsschnittstelleneinheit 330 mit den Befestigungselementen 333, dem Schnittstellenkörperelement 332 und dem Kopplungselement 331 der Kopplungsschnittstelleneinheit 330 (das an bzw. mit dem Kopplungselement 321 der Energieübertragungseinheit 320 koppelbar bzw. an diesem lösbar befestigbar ist).

Auf der Unterseite des Kopplungselements 331 der Kopplungsschnittstelleneinheit 330 weist das Kopplungselement 331 einen Kopplungsabschnitt 331a zur Kopplung bzw. lösbaren Befestigung an das Kopplungselement 321 der Energieübertragungseinheit 320 auf. Der Kopplungsabschnitt 331a umfasst beispielhaft eine Mehrzahl von Befestigungsabschnittsöffnungen 331b auf (z.B. zur Aufnahme von Befestigungselementen für die Kopplung bzw. lösbare Befestigung an das Kopplungselement 321 der Energieübertragungseinheit 320) und beispielhaft zwischen den Befestigungsabschnittsöffnungen 331b angeordnete Kontaktaufnahmeöffnungen 331c (z.B. für elektrische Kontaktverbindungen für elektrische Signal- und/oder Leistungsleitungen zu der Sendespuleneinheit 323 der Energieübertragungseinheit 323).

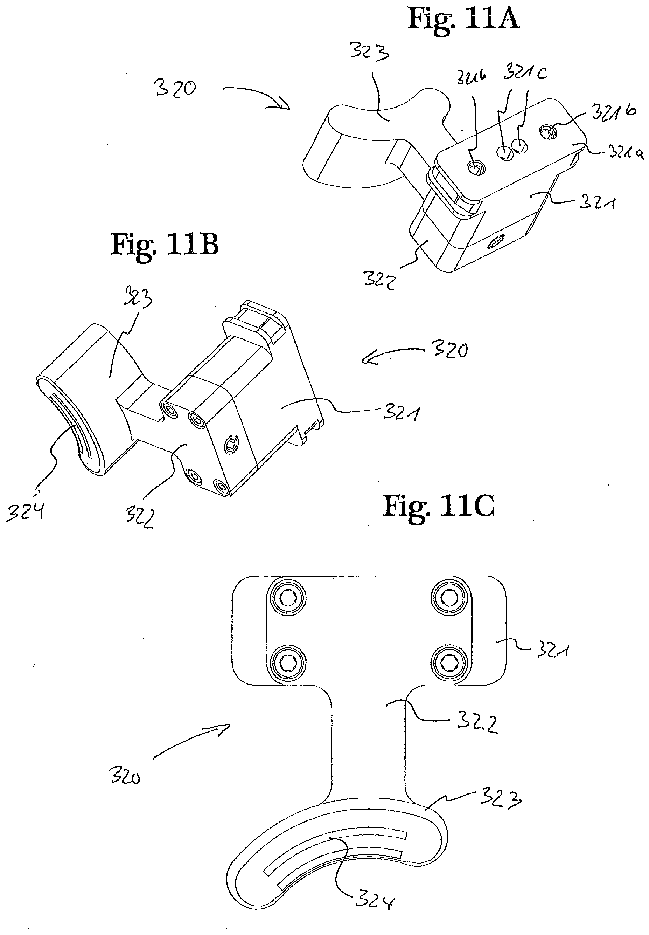

Figs. 11A und 11B zeigen beispielhafte perspektivische Detaildarstellungen der Energieübertragungseinheit 320 gemäß Fig. 10B und Fig. 11C zeigt eine beispielhafte Unteransicht der Energieübertragungseinheit 320 gemäß Fig. 10B. Beispielhaft ist erkennbar, dass das Kopplungselement 322 mittels einer Schraubverbindung mit beispielhaft vier Schrauben an dem Spulenhalterelement 322 befestigt ist (siehe Figs. 11B und 11C), und die Sendespuleneinheit 323 mittels einer Schraubverbindung mit beispielhaft einer Schraube an dem Spulenhalterelement 322 befestigt ist (siehe Figs. 11A und 11B).

Auf der Oberseite des Kopplungselements 322 der Energieübertragungseinheit 320 weist das Kopplungselement 322 einen Kopplungsabschnitt 321a zur Kopplung bzw. lösbaren Befestigung an das Kopplungselement 331 der Kopplungsschnittstelleneinheit 330 auf. Der Kopplungsabschnitt 321a umfasst beispielhaft eine Mehrzahl von Befestigungsabschnittsöffnungen 321b auf (z.B. zur Aufnahme von Befestigungselementen für die Kopplung bzw. lösbare Befestigung an das Kopplungselement 331 der Kopplungsschnittstelleneinheit 330) und beispielhaft zwischen den Befestigungsabschnittsöffnungen 321b angeordnete Kontakt-aufnahmeöffnungen 321c (z.B. für elektrische Kontaktverbindungen für elektrische Signal- und/oder Leistungsleitungen zu der Sendespuleneinheit 323).

Bevorzugt sind die Kopplungsabschnitte 321a und 331a zueinander jeweils als Steckverbindungssystem ausgebildet, wobei die jeweiligen Befestigungsabschnittsöffnungen 321b und 331b jeweils bevorzugt mechanische Steckverbindungselemente aufweisen, und die Kontaktaufnahmeöffnungen 321c und 331c jeweils bevorzugt elektrische Kontaktsteckverbindungselemente aufweisen

In einigen Ausführungsbeispielen können die Befestigungsabschnittsöffnungen 321b des Kopplungselements 321 der Energieübertragungseinheit 320 z.B. mechanisch männliche Steckverbindungselemente aufweisen und die Befestigungsabschnittsöffnungen 331b des Kopplungselements 331 der Kopplungsschnittstelleneinheit 330 können entsprechende mechanisch weibliche Steckverbindungselemente aufweisen.

In anderen Ausführungsbeispielen können die Befestigungsabschnittsöffnungen 321b des Kopplungselements 321 der Energieübertragungseinheit 320 z.B. mechanisch weibliche Steckverbindungselemente aufweisen und die Befestigungsabschnittsöffnungen 331b des Kopplungselements 331 der Kopplungsschnittstelleneinheit 330 können entsprechende mechanisch männliche Steckverbindungselemente aufweisen.

Auch Mischkombinationen sind denkbar, bei denen die Befestigungsabschnittsöffnungen 321b des Kopplungselements 321 der Energieübertragungseinheit 320 z.B. mechanisch weibliche und mechanisch männliche Steckverbindungselemente aufweisen und die Befestigungsabschnittsöffnungen 331b des Kopplungselements 331 der Kopplungsschnittstelleneinheit 330 entsprechende mechanisch männliche und weibliche Steckverbindungselemente aufweisen.

Analog können auch die Kontaktaufnahmeöffnungen 321c elektrisch männliche und/oder weibliche Kontaktsteckverbindungselemente aufweisen und die Kontaktaufnahmeöffnungen 331c entsprechende elektrisch weibliche und/oder männliche Kontaktsteckverbindungselemente aufweisen.

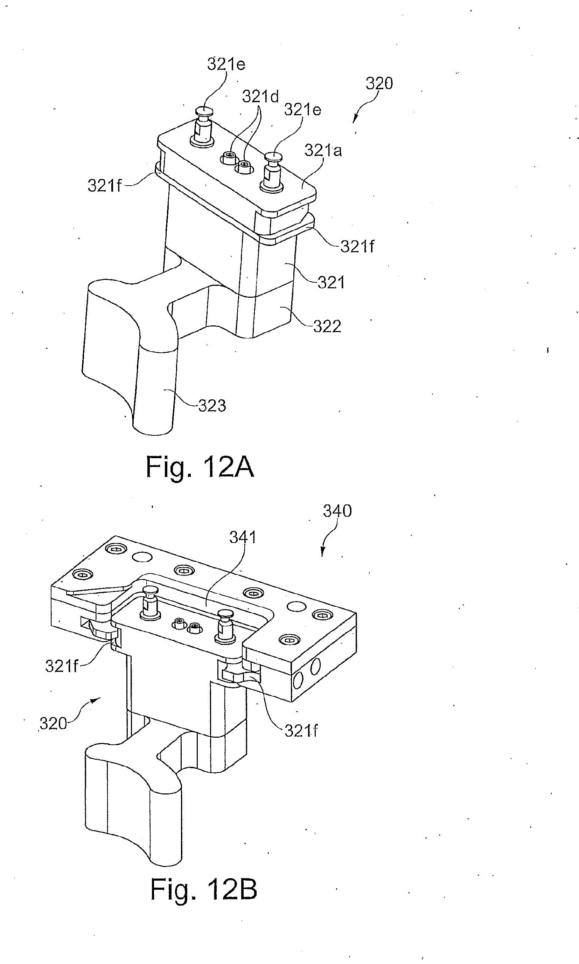

Fig. 12A zeigt eine beispielhafte Perspektivdarstellung einer Energieübertragungseinheit 320 gemäß einem Ausführungsbeispiel der Erfindung und Fig. 12B zeigt eine beispielhafte Perspektivdarstellung der Energieübertragungseinheit 320 gemäß Fig. 12A in einer Kopplungselementaufnahme 341 eines Kopplungselementhalter 340.

In Figs. 12A und 12B ist der Kopplungsabschnitt 321a des Kopplungselements 321 der Energieübertragungseinheit 320 beispielhaft mit mechanisch männlichen Steckverbindungselementen 321e in den Befestigungsabschnittsöffungen ausgestattet. Diese Steckverbindungselemente 321e (beispielhaft Befestigungsbolzen 321e) sind beispielhaft als Rastbolzen für eine lösbare Rastverbindung mit dem Kopplungselement 331 der Kopplungsschnittstelleneinheit 330 ausgebildet. Weiterhin sind in den Kontaktaufnahmeöffungen des Kopplungselements 321 der Energieübertragungseinheit 320 in Figs. 12A und 12B beispielhaft elektrisch männliche Kontaktsteckverbindungselemente vorgesehen.

Weiterhin weist das Kopplungselement 321 seitlich angeordnete Halteabschnitte 321f auf. Gemäß Fig. 12B kann das Kopplungselement 321 mit den Halteabschnitten 321f an der Kopplungselementaufnahme 341 des Kopplungselementhalters 340 gehalten bzw. vorgehalten werden. Beispielsweise kann ein derartiger Kopplungselementhalter 340 an der Werkzeugmaschine 100 bereitgestellt werden, um die Energieübertragungseinheit 320 zu lagern oder vorzuhalten, wenn dies nicht an der Kopplungsschnittstelleneinheit 330 angedockt bzw. angekoppelt ist.

Zum Beispiel ist es vorteilhaft, mehrere unterschiedliche Energieübertragungseinheiten 320 in jeweiligen Kopplungselementhaltern 340 bereitzustellen, z.B. für unterschiedliche Anwendungsfälle ggf. mit Sendespuleneinheiten 323 unterschiedlicher Größen bzw. unterschiedlicher Spulendurchmesser (z.B. für Werkzeugschnittstelleneinheiten 310 mit unterschiedlichen bzw. unterschiedlich dimensionierten Werkzeugschnittstellenkörpern 311) und/oder Empfängerspuleneinheiten 312 unterschiedlicher Größen bzw. unterschiedlicher Spulendurchmesser. Die unterschiedlichen Energieübertragungseinheiten 320 weisen alle bevorzugt ein gleich ausgebildetes Kopplungselement 331 auf, um z.B. vorteilhaft an der selben Kopplungsschnittstelleneinheit 330 angedockt bzw. angekoppelt werden zu können. Dies ermöglicht vorteilhaft einen ggf. automatischen Wechsel der Energieübertragungseinheit 320 entsprechend etwaiger gewünschter Auswechselungen von Werkzeugschnittstelleneinheiten 310.

Des Weiteren kann die Energieübertragungseinheit 320 vorteilhaft einfach an dem Kopplungselementhalter 340 zwischengelagert werden, wenn statt einer Werkzeugschnitt-stelleneinheit 310 ein normales Werkzeug mit der Werkzeugwechselvorrichtung 190 an der Arbeitsspindel 172 eingewechselt werden soll, oder gar wenn eine etwaige eine Materialauftragsvorrichtung 230 eines Materialauftrags-Bearbeitungssystems 200 an der Werkzeugaufnahme 173 der Arbeitsspindel 172 eingesetzt werden soll.

An einer Werkzeugmaschine 100 kann hierbei bevorzugt ein steuerbarer Manipulator oder Handhabungsroboter ggf. mit Greifvorrichtung bereitgestellt werden, der dazu eingerichtet ist, ggf. automatisch eine Energieübertragungseinheit 320 an einem Kopplungselementhalter 340 zu entnehmen bzw. abzulegen und/oder eine an der Kopplungsschnittstelleneinheit 330 angedockte bzw. angekoppelte und lösbar befestigte Energieübertragungseinheit 320 ggf. automatisch aufzunehmen bzw. eine Energieübertragungseinheit 320 an der Kopplungsschnittstelleneinheit 330 ggf. automatisch lösbar befestigt anzudocken bzw. anzukoppeln.

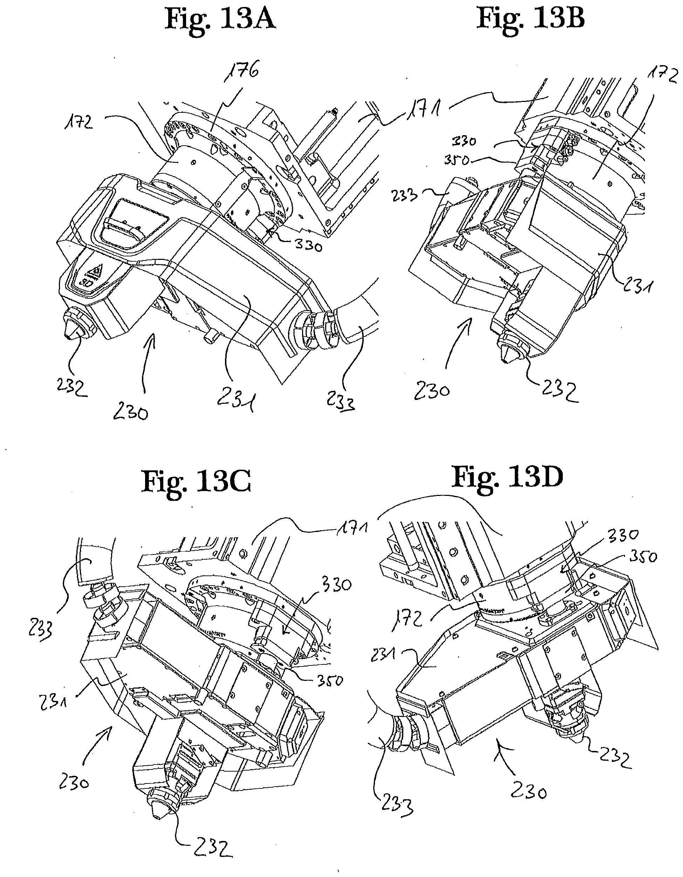

Figs. 13A bis 13D zeigen beispielhafte perspektivische Detaildarstellungen der Spindelvorrichtung 170 gemäß Fig. 4 mit eingesetzter Materialauftragsvorrichtung 230 gemäß einem Ausführungsbeispiel der Erfindung.

Die Materialauftragsvorrichtung 230 umfasst ein Bearbeitungskopfgehäuse 231, an dem ein Materialauftrags-Bearbeitungskopf 232 gehalten ist, der beispielhaft ein eine Düse zum Auftragen von Material auf ein Werkstück aufweist. Beispielhaft ist der Materialauftrags-Bearbeitungskopf 232 als Laserkopf ausgebildet, der dazu eingerichtet ist, Material auf einer Oberfläche eines Werkstücks durch Auftragsschweißen aufzubringen, wobei ein metallisches Pulver durch die Düse des Materialauftrags-Bearbeitungskopfes 232 auf die Oberfläche des Werkstücks aufgebracht wird und mittels eines Laserstrahls an der Oberfläche angeschweißt wird. In diesem Zusammenhang sei noch einmal auf die in der DE 10 2013 224 649 A1 beschriebenen Bearbeitungsköpfe und Auftragsschweiß-Bearbeitungsverfahren verwiesen.

Zur Versorgung des Materialauftrags-Bearbeitungskopf 232 z.B. mit elektrischer Energie, Steuersignalen, Auftragsmaterial z.B. als metallisches Pulver sowie ein druckbeaufschlagtes Gas zur Vermeidung von Oxidation des zugeführten Pulvers beim Auftragsschweißen und zur Zuführung des Pulvers aus der Düse des Materialauftrags-Bearbeitungskopfes 232 ist an der Materialauftragsvorrichtung 230 die Zuführungsleitung 233 angebracht und mit dem Materialauftrags-Bearbeitungskopf 232 verbunden.

In den Figs. 13A bis 13D ist die Materialauftragsvorrichtung 230 beispielhaft an der Arbeitsspindel 172 der Spindelvorrichtung 170 aufgenommen. Hierbei ist die an der Spindelvorrichtung 170 gemäß vorstehend beschriebenen Ausführungsbeispielen befestigte Kopplungsschnittstelleneinheit 330 erkennbar, an dessen Kopplungselement ein weiteres Kopplungselement eines Kopplungselementadapters 350 für die Materialauftragsvorrichtung 230 vorgesehen ist.

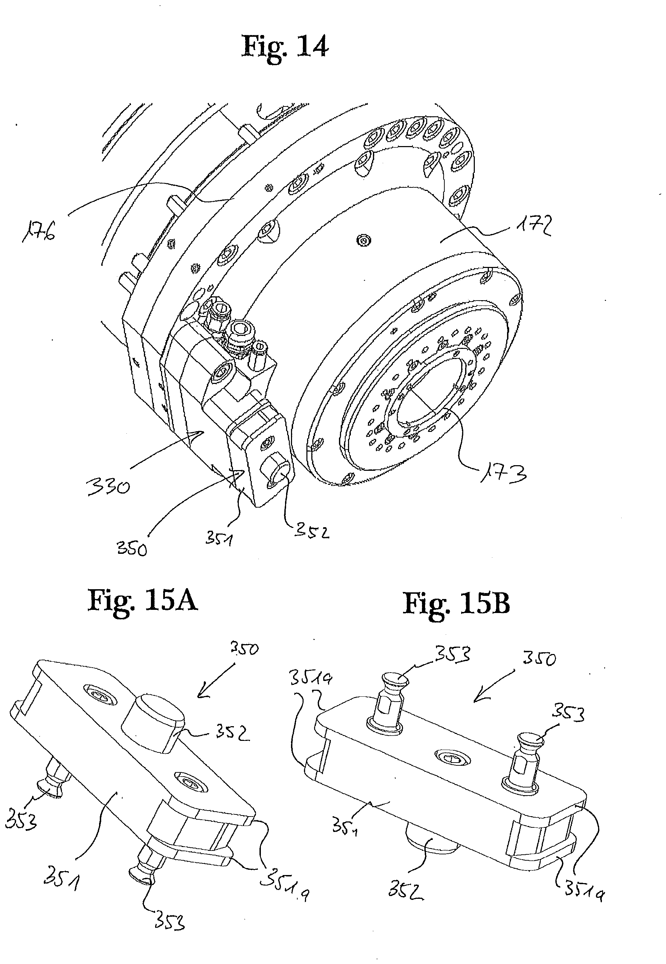

Fig. 14 zeigt eine beispielhafte perspektivische Detaildarstellung der Spindelvorrichtung 170 gemäß Fig. 4 ohne eingesetzte Materialauftragsvorrichtung 230. Hierbei ist der Kopplungselementadapter 350 für die Materialauftragsvorrichtung 230 in an dem Kopplungselement 333 der vorstehend beschriebenen Kopplungsschnittstelleneinheit 330 angekoppeltem bzw. angedockten Zustand der lösbaren Befestigung der Kopplungselemente erkennbar, wobei der Kopplungselementadapter 350 ein Kopplungselement 351 analog zu dem Kopplungselement 321 der vorstehend beschriebenen Energieübertragungseinheit 320 aufweist.

Figs. 15A und 15B zeigen beispielhafte perspektivische Detaildarstellungen des Kopplungselementadapters 350 des Werkzeug-Kopplungssystems 300 gemäß einem Ausführungsbeispiel der Erfindung.

Das Kopplungselement 351 des Kopplungselementadapters 350 weist analog zu dem Kopplungselement 321 der vorstehend beschriebenen Energieübertragungseinheit 320 seitliche Halteabschnitte 351a auf, an denen der Kopplungselementadapter 350 analog zu der Energieübertragungseinheit 320 gemäß Fig. 12B an der Kopplungselementaufnahme 341 des Kopplungselementhalters 340 aufgenommen und vorgehalten werden kann. Weiterhin weist das Kopplungselement 351 des Kopplungselementadapters 350 beispielhaft analog zu der Energieübertragungseinheit 320 gemäß Fig. 12A Befestigungsbolzen 353 als Steckverbindungselemente auf. Hierbei können in weiteren Ausführungsbeispielen entsprechend der Ausgestaltung der Kopplungsschnitt-stelleneinheit 330 männliche und/oder weibliche Steckverbindungselemente vorgesehen werden.

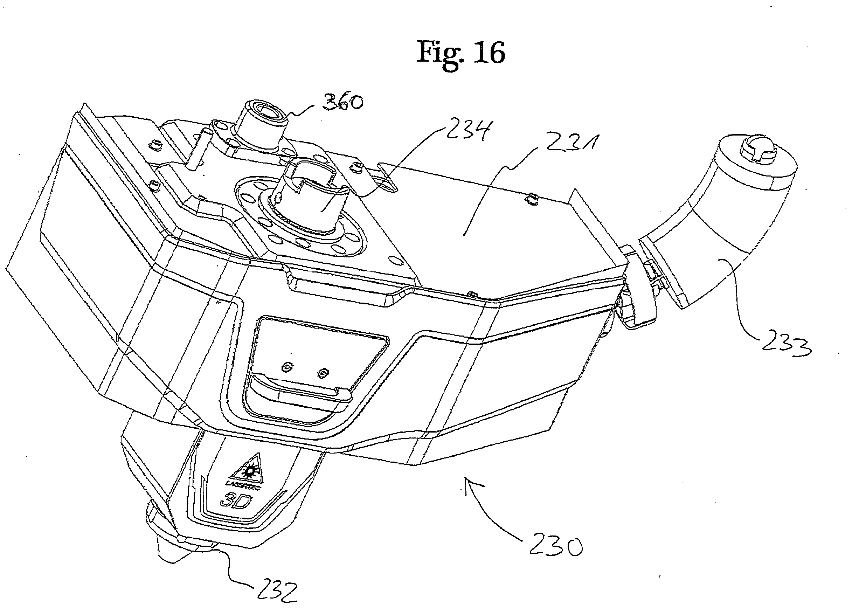

Auf der den Befestigungsbolzen 353 gegenüberliegenden Seite weist das Kopplungselement 351 des Kopplungselementadapters 350 beispielhaft ein weiteres Befestigungselement 352 (beispielhaft als mechanisch männliches Steckverbindungselement ausgebildet) für eine lösbare Verbindung an ein entsprechendes Befestigungselement 360 des Werkzeug-Kopplungssystems 300 auf der (siehe Fig. 16). Bevorzugt sind auch die Befestigungselemente 352 und 360 als entsprechende zueinanderpassende Steckverbindungselemente ausgebildet.

Fig. 16 zeigt eine beispielhafte Perspektivdarstellung der Materialauftragsvorrichtung 230 gemäß Figs. 13A bis 13D. Diese umfasst wie vorstehend beispielhaft beschrieben den an dem Bearbeitungskopfgehäuse 231 gehaltenen Materialauftrags-Bearbeitungskopf 232 und die angeschlossene Zuführleitung 233. Des Weiteren ist auf dem Bearbeitungskopfgehäuse 231 auf der dem Materialauftrags-Bearbeitungskopf 232 gegenüberliegenden Seite ein Werkzeugschnittstellenkörper 234 ausgebildet bzw. angeordnet, der beispielhaft als Hohlschaftkegel-Schnittstellenabschnitt ausgebildet ist.

Die Werkzeugaufnahme 173 der Arbeitsspindel 172 ist analog zur Aufnahme des Werkzeugschnittstellenkörpers 311 der Werkzeugschnittstelleneinheit 310 dazu eingerichtet, den Werkzeugschnittstellenkörper 234 der Materialauftragsvorrichtung 230 aufzunehmen bzw. einzuspannen. Benachbart zu bzw. neben dem Werkzeugschnittstellenkörper 234 ist an dem Bearbeitungskopfgehäuse 231 auf der dem Materialauftrags-Bearbeitungskopf 232 gegenüberliegenden Seite das Befestigungselement 360 des Werkzeug-Kopplungssystems 300 angebracht bzw. ggf. durch Schraubverbindung befestigt.

Wenn die Materialauftragsvorrichtung 230 mit dem Werkzeugschnittstellenkörper 234 an der Werkzeugaufnahme 173 der Arbeitsspindel 172 aufgenommen bzw. eingespannt ist (siehe z.B. Figs. 13A bis 13D), dann sind die Befestigungselemente 360 und 252 miteinander verbunden, beispielhaft mittels einer quer zur Spindelachse ortsfest formschlüssigen Steckverbindung.

Dies ermöglicht beim Einsetzen der Materialauftrags-vorrichtung 230 an der Arbeitsspindel 172 gleichzeitig eine vorteilhaft präzise und passgenaue Positionierung der Materialauftragsvorrichtung 230, die in der Werkzeugaufnahme 173 der Arbeitsspindel 172 theoretisch aufgrund der rotations-symmetrischen Werkzeugschnittstelle bzw. des rotationssymmetrischen Hohlschaftkegels in verschiedenen Winkelstellungen eingesetzt werden könnte, jedoch aufgrund der zweiten Verbindung der Befestigungselemente 360 und 252 auf eine einzige Winkelstellung festgelegt ist.

Weiterhin stabilisiert die zweite Verbindung der Befestigungselemente 360 und 252 vorteilhaft die Orientierung der Materialauftragsvorrichtung 230 auch bei schnellem Verfahren des Spindelträgers 171 in horizontaler Richtung (d.h. z.B. in den Richtungen der X- und Y-Achsen der Achsschlitten-Baugruppe der Werkzeugmaschine 100) und verhindert somit vorteilhaft ein Verdrehen der Materialauftragsvorrichtung 230 bei schnellem Verfahren des Spindelträgers 171 in horizontaler Richtung sowie ein etwaiges unerwünschtes Nachschwingen der Materialauftragsvorrichtung 230 um die Spindelachse.

Zusammenfassend wird ein vielseitig einsetzbares und platz- sowie kostensparendes Werkzeugschnittstellensystem bzw. Kopplungsschnittstellensystem für Werkzeugmaschinen bereitgestellt, das insbesondere platz- und kostensparend mit vorteilhaft synergetischen Effekten in Bezug auf vorteilhafte Energie- und Signalübertragung bzw. -versorgung sowie auf vorteilhaft effiziente, zeitsparende und vielseitige Werkzeugwechselmöglichkeiten und präzise Werkzeug- und Bearbeitungskopfausrichtung insbesondere bei Anwendung an Hybrid-Werkzeugmaschinen vorteilhaft einsetzbar ist, an denen ggf. zusätzlich zu einer herkömmlichen zerspanenden Bearbeitung weitere Bearbeitungsmöglichkeiten kombinierbar sind, wie z.B. mit elektrische Verbraucher aufweisenden Werkzeugschnittstelleneinheiten, die z.B. in der Ultraschall-Bearbeitung Anwendung finden, und/oder in Verbindung mit Materialauftrags-Bearbeitungsköpfen zum Auftragen von Material an der herkömmlich materialabtragend arbeitenden Werkzeugmaschine.

### Bezugszeichenliste

| | | | |
|---|---|---|---|
| 100 | Werkzeugmaschine | 313 | Werkzeugaufnahmeabschnitt |
| 110 | Maschinenbett | 314 | Empfängerspule |
| 120 | Schwenktisch | 320 | Energieübertragungseinheit |
| 130 | Drehtisch | 321 | Kopplungselement |
| 140 | erster Achsschlitten | 321a | Kopplungsabschnitt |
| 150 | zweiter Achsschlitten | 321b | Befestigungsabschnittsöffnungen |
| 160 | Spindelkopfgehäuse | 321c | Kontaktaufnahmeöffnungen |
| 170 | Spindelvorrichtung | 321d | Kontaktanschlüsse |
| 171 | Spindelträgerschlitten | 321e | Befestigungsbolzen |
| 172 | Arbeitsspindel | 321f | Halteabschnitte |
| 173 | Werkzeugaufnahme | 322 | Spulenhalterelement |
| 174 | Spindelschlittenführungen | 323 | Sendespuleneinheit |
| 175 | Spindelgehäuse | 324 | Sendespulensegment |
| 176 | Befestigungsrahmen | 330 | Kopplungsschnittstelleneinheit |
| 180 | Werkzeugmagazin | 331 | Kopplungselement |
| 190 | Werkzeugwechselvorrichtung | 331a | Kopplungsabschnitt |
| | | 331b | Befestigungsabschnittsöffnungen |
| 200 | Materialauftrags-Bearbeitungssystem | 331c | Kontaktaufnahmeöffnungen |
| 210 | Schlittenführung | 332 | Schnittstellenkörperelement |
| 220 | dritter Achsschlitten | 333 | Befestigungselemente |
| 230 | Materialauftragsvorrichtung | 334 | Anschlusselemente |
| 231 | Bearbeitungskopfgehäuse | 340 | Kopplungselementhalter |
| 232 | Materialauftrags-Bearbeitungskopf | 341 | Kopplungselementaufnahme |
| 233 | Zuführungsleitung | 350 | Kopplungselementadapter |
| 234 | Werkzeugschnittstellenkörper | 351 | Kopplungselement |
| | | 352 | Befestigungselement |
| 300 | WerkzeugKopplungssystem | 353 | Befestigungsbolzen |
| 310 | Werkzeugschnittstelleneinheit | 360 | Befestigungselement |
| 311 | Werkzeugschnittstellenkörper | | |
| 311a | Greiferrille | WS | Werkstück |
| 312 | Empfängerspuleneinheit | WZ | Werkzeug |

## Patentansprüche

1. System zur Verwendung an einer Spindelvorrichtung (170) einer Werkzeugmaschine (100), umfassend:
eine Energieübertragungseinheit (320) mit einer Sendespuleneinheit (323) zur berührungslosen Übertragung elektrischer Energie auf eine Empfängerspuleneinheit (312) einer Werkzeugschnittstelleneinheit (310), die
die Empfängerspuleneinheit (312),
einen elektrischen Verbraucher und
einen Werkzeugschnittstellenabschnitt (311) zur Aufnahme der Werkzeugschnittstelleneinheit (310) an einer Werkzeugaufnahme (173) einer Arbeitsspindel (172) der Spindelvorrichtung (170) aufweist, und
eine Kopplungsschnittstelleneinheit (330) mit einem an der Spindelvorrichtung (170) befestigbaren Schnittstellenkörperelement (332) und einem zweiten Kopplungselement (331), das dazu eingerichtet ist, mittels einer lösbaren Verbindung an ein erstes Kopplungselement (321) der Energieübertragungseinheit (320) angekoppelt zu werden,
wobei die Kopplungsschnittstelleneinheit (330) einen elektrisch, hydraulisch oder pneumatisch steuerbaren Verriegelungsmechanismus zum Ent- und Verriegeln der lösbaren Befestigung zwischen den ersten und zweiten Kopplungselementen (321, 331) aufweist,
**gekennzeichnet durch** einen Kopplungselementadapter (350) mit einem dritten Kopplungselement (351), das dazu eingerichtet ist, analog zu dem ersten Kopplungselement (321) der Energieübertragungseinheit (320) an dem zweiten Kopplungselement (331) der Kopplungsschnittstelleneinheit (330) mittels einer lösbaren Verbindung angekoppelt zu werden, wenn das erste Kopplungselement (321) der Energieübertragungseinheit (320) von dem zweiten Kopplungselement (331) der Kopplungsschnittstelleneinheit (330) entkoppelt ist.

2. System gemäß Anspruch 1, **dadurch gekennzeichnet, dass** die ersten und zweiten Kopplungselemente (321, 331) jeweils ein oder mehrere Steckverbindungselemente aufweisen, derart, dass das eine oder die mehreren Steckverbindungselemente des ersten Kopplungselements (321) mit dem einen oder den mehreren Steckverbindungselementen des zweiten Kopplungselements (331) dazu eingerichtet sind, zur lösbaren Befestigung des ersten Kopplungselements (321) an dem zweiten Kopplungselement (331) eine lösbare Steckverbindung herzustellen.

3. System gemäß Anspruch 1 oder 2, **dadurch gekennzeichnet, dass** die ersten und zweiten Kopplungselemente (321, 331) jeweils miteinander verbindbare elektrische Kontaktabschnitte aufweisen, zur Herstellung einer elektrischen Verbindung zwischen den ersten und zweiten Kopplungselementen (321, 331), wenn das erste Kopplungselement (321) an dem zweiten Kopplungselement (331) lösbar befestigt ist.

4. System gemäß Anspruch 3, **dadurch gekennzeichnet, dass** das erste Kopplungselement (321) elektrische Leitungsführungen aufweist, die die Sendespuleneinheit (323) der Energieübertragungseinheit (320) mit den elektrischen Kontaktabschnitten des ersten Kopplungselements (321) elektrisch verbinden.

5. System gemäß Anspruch 3 oder 4, **dadurch gekennzeichnet, dass** das zweite Kopplungselement (331) elektrische Leitungsführungen aufweist, die die elektrischen Kontaktabschnitte des zweiten Kopplungselements (331) mit an dem Schnittstellenkörperelement (332) der Kopplungsschnittstelleneinheit (330) angeordneten elektrischen Anschlusselementen (334) zum Anschluss externer elektrischer Leitungsführungen elektrisch verbinden.

6. System gemäß einem der vorstehenden Ansprüche, **dadurch gekennzeichnet, dass** die Kopplungsschnittstelleneinheit (330) an dem Schnittstellenkörperelement (332) angeordnete elektrische, hydraulische oder pneumatische Anschlusselemente (334) zur Steuerung des Verriegelungsmechanismus aufweist.

7. System gemäß einem der vorstehenden Ansprüche, **gekennzeichnet durch** einen an der Werkzeugmaschine (100) anbringbaren Kopplungselementhalter (340) mit einer Kopplungselementaufnahme (341) zur haltenden Aufnahme der Energieübertragungseinheit (320), wenn das erste Kopplungselement (321) der Energieübertragungseinheit (320) von dem zweiten Kopplungselement (331) der Kopplungsschnittstelleneinheit (330) entkoppelt ist.

8. System gemäß Anspruch 1, **dadurch gekennzeichnet, dass** die dritten und zweiten Kopplungselemente (351, 331) jeweils ein oder mehrere Steckverbindungselemente aufweisen, derart, dass das eine oder die mehreren Steckverbindungselemente des dritten Kopplungselements (351) mit dem einen oder den mehreren Steckverbindungselementen des zweiten Kopplungselements (331) dazu eingerichtet sind, zur lösbaren Befestigung des dritten Kopplungselements (351) an dem zweiten Kopplungselement (331) eine lösbare Steckverbindung herzustellen.

9. System gemäß Anspruch 8, **dadurch gekennzeichnet, dass** das dritte Kopplungselement (351) auf der den Steckverbindungselementen für die Steckverbindung mit dem zweiten Kopplungselement (331) gegenüberliegenden Seite ein Befestigungselement (352) aufweist, zur lösbaren Befestigung an einem weiteren Befestigungselement (360), das an einer an der Werkzeugaufnahme (173) der Arbeitsspindel (172) der Spindelvorrichtung (170) aufnehmbaren Materialauftragsbearbeitungsvorrichtung (230) befestigbar ist.

10. System gemäß einem der vorstehenden Ansprüche, **dadurch gekennzeichnet, dass**
das System weiterhin die Werkzeugschnittstelleneinheit (310) mit der Empfängerspuleneinheit (312) umfasst, wobei
die Werkzeugschnittstelleneinheit (310) weiterhin auf einer dem Werkzeugschnittstellenabschnitt (311) gegenüberliegenden Seite einen Werkzeugaufnahmeabschnitt (313) zur Aufnahme eines Werkzeugs aufweist; und/oder
die Werkzeugschnittstelleneinheit (310) als elektrischen Verbraucher einen Vibrationsantrieb aufweist, der dazu eingerichtet ist, eine Schwingung der Werkzeugschnittstelleneinheit (310) anzutreiben, insbesondere im Ultraschall-Frequenzbereich.

11. Kopplungsschnittstelleneinheit (330) zur Verwendung in einem System zur Verwendung an einer Spindelvorrichtung (170) einer Werkzeugmaschine (100) gemäß einem der Ansprüche 1 bis 10, umfassend:
ein an der Spindelvorrichtung (170) befestigbares Schnittstellenkörperelement (332) und ein zweites Kopplungselement (331), das dazu eingerichtet ist, mittels einer lösbaren Verbindung an ein erstes Kopplungselement (321) einer Energieübertragungseinheit (320) des Systems angekoppelt zu werden,
wobei die Kopplungsschnittstelleneinheit (330) einen elektrisch, hydraulisch oder pneumatisch steuerbaren Verriegelungsmechanismus zum Ent- und Verriegeln der lösbaren Befestigung zwischen den ersten und zweiten Kopplungselementen (321, 331) aufweist,
**gekennzeichnet durch** einen Kopplungselementadapter (350) mit einem dritten Kopplungselement (351), das dazu eingerichtet ist, analog zu dem ersten Kopplungselement (321) der Energieübertragungseinheit (320) an dem zweiten Kopplungselement (331) der Kopplungsschnittstelleneinheit (330) mittels einer lösbaren Verbindung angekoppelt zu werden, wenn das erste Kopplungselement (321) der Energieübertragungseinheit (320) von dem zweiten Kopplungselement (331) der Kopplungsschnittstelleneinheit (330) entkoppelt ist.

12. System umfassend eine Spindelvorrichtung (170) zur Verwendung an einer Werkzeugmaschine (100) und eine Kopplungsschnittstelleneinheit (330) gemäß Anspruch 11, wobei die Kopplungsschnittstelleneinheit (330) an der Spindelvorrichtung (170) befestigt ist.

## Claims

1. A system for use at a spindle apparatus (170) of a machine tool (100), comprising:
an energy transmission unit (320) including a transmitter coil unit (323) for contactless transmission of electrical energy to a receiver coil unit (312) of a tool interface unit (310), said tool interface unit (310) including:
said receiver coil unit (312);
an electrical load; and
a tool interface portion (311) for receiving said tool interface unit (310) at a tool receptacle (173) of a work spindle (172) of said spindle apparatus (170); and
a coupling interface unit (330) including an interface body element (332) attachable to said spindle apparatus (170) and a second coupling element (331) configured to be coupled to a first coupling element (321) of said energy transmission unit (320) via a releasable connection; and
wherein said coupling interface unit (330) includes an electrically, hydraulically, or pneumatically controllable locking mechanism for unlocking and locking the releasable connection between the first and second coupling elements (321, 331),
**characterized by** a coupling element adapter (350) including a third coupling element (351) configured to be coupled to said second coupling element (331) of said coupling interface unit (330) via a releasable connection analogously to said first coupling element (321) of said energy transmission unit (320), when said first coupling element (321) of said energy transmission unit (320) is decoupled from said second coupling element (331) of said coupling interface unit (330).

2. The system according to claim 1, **characterized in that** the first and second coupling elements (321, 331) each have one or more plug connection elements such that the one or more plug connection elements of said first coupling element (321), together with the one or more plug connection elements of said second coupling element (331), are configured to establish a releasable plug connection for the releasable attachment of said first coupling element (321) to said second coupling element (331).

3. The system according to claim 1 or 2, **characterized in that** the first and second coupling elements (321, 331) each have interconnectable electrical contact portions for establishing an electric connection between the first and second coupling elements (321, 331) when said first coupling element (321) is releasably attached to said second coupling element (331).

4. The system according to claim 3, **characterized in that** said first coupling element (321) includes electrical wirings electrically connecting said transmitter coil unit (323) of said energy transmission unit (320) with the electric contact portions of said first coupling element (321).

5. The system according to claim 3 or 4, **characterized in that** said second coupling element (331) is configured to electrically connect the electric contact portions of said second coupling element (331) with electric connection elements (334) arranged on said interface body element (332) of said coupling interface unit (330) for connecting external electrical wirings

6. The system according to one of the preceding claims **characterized in that** said coupling interface unit (330) has electric, hydraulic or pneumatic connection elements (334) arranged on said interface body element (332) in order to control the locking mechanism.

7. The system according to one of the preceding claims **characterized by** a coupling element holder (340) that is attachable to said machine tool (100) and includes a coupling element receptacle for holdingly receiving said energy transmission unit (320) when said first coupling element (321) of said energy transmission unit (320) is decoupled from said second coupling element (331) of said coupling interface unit (330).

8. The system according to claim 1, **characterized in that** the third and second coupling elements (351, 331) each have one or more plug connection elements such that the one or more plug connection elements of said third coupling element (351), together with the one or more plug connection elements of said second coupling element (331), are configured to establish a releasable plug connection for the releasable attachment of said third coupling element (351) to said second coupling element (331).

9. The system according to claim 8, **characterized in that** the third coupling element (351) includes an attachment element (352) on a side opposite the one or more plug connection elements for the plug connection to said second coupling element (331) for the releasable attachment to a further attachment element (360) attachable to a material deposition processing apparatus (230) that can be received at said tool receptacle (173) of said work spindle (172) of said spindle apparatus (170).

10. The system according to one of the preceding claims **characterized in that**
said system further comprises said tool interface unit (310) including said receiver coil unit (312), wherein
said tool interface unit (310) further comprises a tool receiving portion (313) on a side opposite said tool interface portion (311) in order to receive a tool; and/or
the tool interface unit (310) includes, as the electrical load, a vibration drive configured to drive a vibration of the tool interface unit (310), in particular within the ultrasonic frequency range.

11. A coupling interface unit (330) for use in a system for use at a spindle apparatus (170) of a machine tool (100) according to one of claims 1 to 10, comprising:
an interface body element (332) attachable to said spindle apparatus (170) and a second coupling element (331) configured to be coupled to a first coupling element (321) of the energy transmission unit (320) via a releasable connection; and
wherein said coupling interface unit (330) includes an electrically, hydraulically, or pneumatically controllable locking mechanism for unlocking and locking the releasable connection between the first and second coupling elements (321, 331),
**characterized by** a coupling element adapter (350) including a third coupling element (351) configured to be coupled to the second coupling element (331) of said coupling interface unit (330) via a releasable connection analogously to the first coupling element (321) of said energy transmission unit (320) when the first coupling element (321) of said energy transmission unit (320) is decoupled from the second coupling element (331) of said coupling interface unit (330).

12. A system comprising a spindle apparatus (170) for use at a machine tool (100) and a coupling interface unit (330) according to claim 11, wherein said coupling interface unit (330) is attached to said spindle apparatus (170).

## Revendications

1. Système destiné à une utilisation sur un dispositif de broche (170) d'une machine-outil (100), comprenant :
une unité de transmission d'énergie (320) avec une unité de bobine d'émission (323), pour la transmission sans contact d'une énergie électrique vers une unité de bobine de réception (312) d'une unité d'interface d'outil (310) qui présente
l'unité de bobine de réception (312),
un utilisateur électrique et
une section d'interface d'outil (311) pour la réception de l'unité d'interface d'outil (310) sur une réception d'outil (173) d'une broche de travail (172) du dispositif de broche (170), et
une unité d'interface de couplage (330) avec un élément de corps d'interface (332) pouvant être fixé sur le dispositif de broche (170), et un deuxième élément de couplage (331) qui est conçu pour être couplé à un premier élément de couplage (321) de l'unité de transmission d'énergie (320) au moyen d'une liaison amovible,
dans lequel l'unité d'interface de couplage (330) présente un mécanisme de verrouillage pouvant être commandé de façon électrique, hydraulique ou pneumatique pour déverrouiller et verrouiller la fixation amovible entre les premier et deuxième éléments de couplage (321, 331),
**caractérisé par** un adaptateur d'élément de couplage (350) avec un troisième élément de couplage (351), qui est conçu pour être couplé, de façon analogue au premier élément de couplage (321) de l'unité de transmission d'énergie (320), au deuxième élément de couplage (331) de l'unité d'interface de couplage (330) au moyen d'une liaison amovible lorsque le premier élément de couplage (321) de l'unité de transmission d'énergie (320) est découplée du deuxième élément de couplage (331) de l'unité d'interface de couplage (330).

2. Système selon la revendication 1, **caractérisé en ce que** les premier et deuxième éléments de couplage (321, 331) présentent respectivement un ou plusieurs éléments de liaison par fiche de sorte que le un ou les plusieurs éléments de liaison par fiche du premier élément de couplage (321) soient conçus avec le un ou les plusieurs éléments de liaison par fiche du deuxième élément de couplage (331), pour créer une liaison par fiche amovible pour la fixation amovible du premier élément de couplage (321) sur le deuxième élément de couplage (331).

3. Système selon la revendication 1 ou 2, **caractérisé en ce que** les premier et deuxième éléments de couplage (321, 331) présentent des sections de contact pouvant être respectivement reliées ensemble pour créer une liaison électrique entre les premier et deuxième éléments de couplage (321, 331) lorsque le premier élément de couplage (321) est fixé de façon amovible sur le deuxième élément de couplage (331).

4. Système selon la revendication 3, **caractérisé en ce que** le premier élément de couplage (321) présente des chemins de câblage électriques qui relient électriquement l'unité de bobine d'émission (323) de l'unité de transmission d'énergie (320) aux sections de contact électriques du premier élément de couplage (321).

5. Système selon la revendication 3 ou 4, **caractérisé en ce que** le deuxième élément de couplage (331) présente des chemins de câblage électriques qui relient électriquement les sections de contact électriques du deuxième élément de couplage (331) à des éléments de raccordement (334) électriques agencés sur l'élément de corps d'interface (332) de l'unité d'interface de couplage (330), pour raccorder des chemins de câblage électriques extérieurs.

6. Système selon l'une des revendications précédentes, **caractérisé en ce que** l'unité d'interface de couplage (330) présente des éléments de raccordement (334) électriques, hydrauliques ou pneumatiques agencés sur l'élément de corps d'interface (332) pour commander le mécanisme de verrouillage.

7. Système selon l'une des revendications précédentes, **caractérisé par** un support d'élément de couplage (340) pouvant être fixé sur la machine-outil (100) avec une réception d'élément de couplage (341), pour recevoir en la maintenant l'unité de transmission d'énergie (320) lorsque le premier élément de couplage (321) de l'unité de transmission d'énergie (320) est découplée du deuxième élément de couplage (331) de l'unité d'interface de couplage (330).

8. Système selon la revendication 1, **caractérisé en ce que** les troisième et deuxième éléments de couplage (351, 331) présentent respectivement un ou plusieurs éléments de liaison par fiche de sorte que le un ou les plusieurs éléments de liaison par fiche du troisième élément de couplage (351) soient conçus avec le un ou les plusieurs éléments de liaison par fiche du deuxième élément de couplage (331) pour créer une liaison par fiche amovible pour la fixation amovible du troisième élément de couplage (351) sur le deuxième élément de couplage (331).

9. Système selon la revendication 8, **caractérisé en ce que** le troisième élément de couplage (351) présente un élément de fixation (352) sur le côté opposé aux éléments de liaison par fiche pour la liaison par fiche avec le deuxième élément de couplage (331), pour la fixation amovible sur un autre élément de fixation (360) qui peut être fixé sur un dispositif de traitement d'application de matériau (230) pouvant être reçu sur la réception d'outil (173) de la broche de travail (172) du dispositif de broche (170).

10. Système selon l'une des revendications précédentes, **caractérisé en ce que**
le système comprend en outre l'unité d'interface d'outil (310) avec l'unité de bobine de réception (312), dans lequel
l'unité d'interface d'outil (310) présente en outre une section de réception d'outil (313) sur un côté opposé à la section d'interface d'outil (311), pour recevoir un outil ; et/ou
l'unité d'interface d'outil (310) en tant qu'utilisateur électrique présente un entraînement vibrant qui est conçu pour entraîner une oscillation de l'unité d'interface d'outil (310), en particulier dans la plage de fréquence des ultrasons.

11. Unité d'interface de couplage (330) destinée à une utilisation dans un système destiné à une utilisation sur un dispositif de broche (170) d'une machine-outil (100) selon l'une des revendications 1 à 10, comprenant :
un élément de corps d'interface (332) pouvant être fixé sur le dispositif de broche (170) et un deuxième élément de couplage (331) qui est conçu pour être couplé à un premier élément de couplage (321) d'une unité de transmission d'énergie (320) du système au moyen d'une liaison amovible,
dans lequel l'unité d'interface de couplage (330) présente un mécanisme de verrouillage pouvant être commandé de façon électrique, hydraulique ou pneumatique pour déverrouiller et verrouiller la fixation amovible entre les premier et deuxième éléments de couplage (321, 331),
**caractérisé par** un adaptateur d'élément de couplage (350) avec un troisième élément de couplage (351), qui est conçu pour être couplé, de façon analogue au premier élément de couplage (321) de l'unité de transmission d'énergie (320), au deuxième élément de couplage (331) de l'unité d'interface de couplage (330) au moyen d'une liaison amovible lorsque le premier élément de couplage (321) de l'unité de transmission d'énergie (320) est découplée du deuxième élément de couplage (331) de l'unité d'interface de couplage (330).

12. Système comprenant un dispositif de broche (170) destiné à une utilisation sur une machine-outil (100) et une unité d'interface de couplage (330) selon la revendication 11, dans lequel l'unité d'interface de couplage (330) est fixée sur le dispositif de broche (170).
